# EUROPEAN PATENT APPLICATION

(11) **EP 2 282 170 A2**
(43) Date of publication of application: **09.02.2011**
(21) Application number: 10172081.1
(22) Date of filing: 05.08.2010
(51) Int. Cl.: G01C 21/26

(54) **Specifying reliability of information used in driving support**

(30) Priority: 24.09.2009 JP 2009219211; 07.08.2009 JP 2009184962
(71) Applicant: AISIN AW CO., LTD., Anjo-shi, Aichi-ken 444-1192 (JP)
(72) Inventor: Miyajima, Takayuki, Aichi-ken 444-1192 (JP); Kanba, Motoki, Aichi-ken 444-1192 (JP)
(74) Representative: Kramer - Barske - Schmidtchen

(57) **Abstract**

A device for specifying a reliability of information used in driving support, comprising a storage medium (30) that is adapted to store one or more programs and accuracy information (30b) for specifying a reliability of information used in the one or more programs for each of a plurality of elements; an execution target program specification unit (21a) that is adapted to specify a program from the one or more programs to be executed as an execution target program (22); an element selection unit (21b) that is adapted to select an element that corresponds to the execution target program (22) from the plurality of elements; and a reliability specification unit (21c) that is adapted to specify the reliability of information used in the execution target program (22) based on the accuracy information (30b) of the selected element.

## Description

The present invention relates to a device, method, program and computer readable medium for specifying a reliability of information used in driving support, wherein the processing content of a driving support process is determined depending on the reliability of the information.

Various types of art are known that define the accuracy of information used when performing driving support. For example, JP-A-2005-147713 describes an art that specifies a reliability depending on a version of map information, and an art that specifies a reliability based on the difference between a route specified from map information and a vehicle travel history route found from a map matching history. An art for performing driving support such as a vehicle speed control, a battery regeneration control, a lane departure prevention control, or the like based on a reliability is also described in JP-A-2005-147713.
JP-A-2007-225498 describes an art that specifies a reliability of map information based on a position accuracy of the map information, a secular change in buildings or the like from the most recent examination time of the map information, and an information accuracy that corresponds to the degree of coincidence between the information specified in the map information and an actual state of the buildings or the like. An art that performs driving support such as a stop control, a speed restriction notice, or the like based on a reliability is also described in JP-A-2007-225498.

In the above related art, methods for specifying a reliability and definitions for accuracy information that correspond to various driving support are described. However, a wide variety of driving support is performed in vehicles, such as braking assistance, route guidance, and attention alerts, and there is also a wide variety of accuracy information that can be used as a reference for specifying a reliability, such as the accuracy of a vehicle travel history and the position accuracy of map information. Recently, navigation systems and the like in vehicles have been configured to enable the execution of a wide variety of driving support in one vehicle.

In cases where such a wide variety of driving support is assumed, the accuracy information to be referenced for specifying a reliability of information used when performing any of the driving support often partially or completely overlaps. Duplicating and maintaining the overlapping accuracy information thus results in extremely poor efficiency. Moreover, given the wide variety of accuracy information, the particular accuracy information to be referenced for specifying a reliability in accordance with the driving support must be appropriately selected from among the numerous accuracy information.
The present invention was devised in light of the foregoing problem, and provides art that efficiently manages accuracy information for specifying a reliability of information used when performing various driving support, and that easily selects the accuracy information.

This object is achieved by a device for specifying a reliability of information used in driving support according to claim 1, a method for specifying a reliability of information used in driving support according to claim 10, a program according to claim 14 and a computer readable medium according to claim 15. Further developments are given in the dependent claims. Accuracy information for specifying a reliability of information used in a program is defined for each of a plurality of elements and stored in a storage medium. An element that corresponds to an execution target program is selected from the plurality of elements. Based on the accuracy information of the selected element, the reliability of the information used in the execution target program is specified depending on the processing of the execution target program. In other words, the accuracy information is defined for each of the plurality of elements, and by selecting an element depending on the execution target program, an element to be referenced for specifying the reliability is identified. The accuracy information to be referenced is then specified based on the element.

According to this configuration, the reliability may be specified based on accuracy information defined as a set of information shared by programs, without defining the accuracy information for each program. This can help suppress the volume of the accuracy information. The accuracy of the information used in the program is defined for each of the plurality of elements. Therefore, the accuracy information to be referenced can be specified by selecting an element. Further, since the accuracy information to be referenced for specifying the reliability can be found by specifying an element that corresponds to the execution target program, the accuracy information to be referenced can be easily found. It is also possible to specify the reliability using necessary and sufficient processing without referencing accuracy information that does not need to be referenced in order to specify the reliability. As described above, accuracy information for specifying the reliability of information used in various types of programs can be efficiently managed, and the accuracy information can be easily selected.

Here, the accuracy information stored in the storage medium may be used for specifying the reliability of the information used in the program, and the accuracy of the information used in the program may be indicated for each of the plurality of elements. Specifically, when performing various driving support including vehicle controls and reminders, the information used in the program, such as vehicle position information and map information, is specified in accordance with the content of the driving support. However, all the information used in these programs cannot be realistically specified without error. For example, the vehicle position is dependent on the accuracy of a sensor that specifies the vehicle position, and the map information is dependent on the degree of accuracy with which the map information was created and the degree to which new roads are accurately incorporated. Thus, the accuracy of the information used in the program is specified as accuracy information.

Since the accuracy of the information used in the program can be defined from various standpoints, the plurality of elements is defined in advance, and information that specifies the accuracy for each of the plurality of elements is defined as the accuracy information. That is, the plurality of elements is respectively associated with the information used in the program, and the accuracy information is defined for each element. The accuracy information is information that specifies the preciseness of information used in a program, and may be a value that specifies a numerical error or an index that specifies preciseness (e.g. information that indicates preciseness at a plurality of levels).

The plurality of elements is not limited so long as an accuracy that corresponds to factors that lower the accuracy of the information used in the program is classified. The plurality of elements can be defined from various standpoints, but the elements are preferably independent from one another. In other words, it is preferable that the elements do not have a dependence relationship such that a decrease in the accuracy of an element reduces the accuracy of another element, for example. According to this configuration, specifying the reliability by comprehensively considering the accuracy information of the plurality of elements enables the reliability to be specified in consideration of the minimum number of elements. Further, when the accuracy information is revised, such revisions can be completed by revising only the information per element.

The program may be executed by a control unit inside the vehicle and implement a prescribed function that supports vehicle travel. The driving support is support for the driver driving the vehicle, and the quality of the support varies depending on the reliability of the information used in the program. Thus, various types of driving support can be assumed, such as guidance that provides a reminder, warning, assistance, or intervention in a vehicle control.

An execution target program specification unit is not limited provided that the execution target program specification unit can specify the execution target program. In other words, the execution target program to be executed in the vehicle is not limited so long as the execution target program is selected in accordance with vehicle conditions and vehicle surrounding conditions. A configuration that specifies whether to execute a specific program in accordance with vehicle conditions or vehicle surrounding conditions, a configuration that specifies an execution object from a plurality of programs, or other configurations may be used.

The element selection unit is not limited provided that the element selection unit can select an element that corresponds to the type of execution target program. In other words, once the program is specified, the program processing establishes the information to be used. An element to be referenced in order to indicate the accuracy of information used in the program may be specified in advance. Selecting an element that corresponds to the program enables accurate specification of an element that should be referenced to specify the reliability of the information used in the program. Note that the element that corresponds to the program may be selected for each individual program. Alternatively, the programs may be classified in advance such that programs that use the accuracy information of common elements are of the same type, and an element that corresponds to the type of program is selected.

The reliability specification unit is not limited provided that the reliability specification unit can specify the reliability of the information used in the program based on the accuracy information of the selected element. In other words, the reliability specification unit is not limited so long as the reliability specification unit can specify a reliability that indicates the preciseness of the information used in the program from the accuracy information. The reliability is not limited provided that it is defined such that a higher reliability means a smaller negative effect on the vehicle when driving support is performed. For example, a configuration may be used that evaluates the reliability depending on the magnitude of the effect on driving or the like when the vehicle control is performed with the information used in the program considered to be accurate, even though the information is not accurate.

In a configuration where the information used in the program includes vehicle position information, the accuracy information may include information that specifies the accuracy of the vehicle position information that is specified by a correspondence relationship between the vehicle and a feature around the vehicle. According to this configuration, for example, it is possible to specify a feature around the vehicle such as a crosswalk, road, or white lines on the road, and specify the reliability of the vehicle position information used when performing driving support that brakes or issues a reminder if the correspondence relationship between the vehicle and the feature is a specific relationship.

In a configuration where the information used in the program includes map information, the accuracy information may include information that indicates an error of the map information that specifies a value related to a feature, and information that indicates an update frequency of the value. According to this configuration, for example, it is possible to specify the reliability of the map information used when performing driving support that specifies a braking timing or braking amount based on a value related to a feature, such as the positions of nodes and shape interpolation points set on a road, and the curvature radius of a road. Information that specifies an invariance of a road specified by the map information may also be included in the accuracy information. According to this configuration, it is possible to incorporate whether a road specified by the map information is accurate and evaluate the reliability of information used in the execution target program.

The program type is not limited and various configurations may be used, provided that the program type is defined such that an element of the accuracy information to be referenced is specified depending on the type. For example, a configuration may be used in which the program type is classified based on an allowable error of information used in each program. In other words, depending on the degree of effect caused by performing erroneous support during various types of driving support, erroneous support cannot be tolerated for some support, while erroneous support can be tolerated for others if performed. For example, if erroneous support is performed in a control for increasing safety, safety may be reduced. But if erroneous support is performed in a control for increasing convenience, convenience may be reduced but safety is not affected. Erroneous support is thus not tolerated in the former, but is tolerated in the latter. The allowable error of the information used in the program is smaller for driving support such as the former compared to driving support such as the latter.

Further, when performing driving support such as the former, the processing content of the program must be determined such that erroneous support is not performed, based on the reliability specified from the accuracy information. Therefore, the accuracy information to be referenced for specifying the reliability of the information used in the program may differ between driving support such as the former and driving support such as the latter. Hence, if the programs are classified into a plurality of types based on the allowable error of the information used in the program, a configuration that selects an element that corresponds to the program type from the plurality of elements enables accurate selection of the accuracy information that should be referenced.

Note that the configuration that selects an element based on the program type may be applied with respect to various classifications instead of classifying the program type based on the allowable error as described above. For example, when the programs are classified into different types depending on whether the driving support performed by the processing of the program is support that aims to increase safety or support that aims to increase convenience, such classification may be performed based on another index instead of the allowable error. Further, programs may be classified into different types when the control object that is subject to the control based on the processing of the program is different (e.g. when the control objects are the braking portion and the gear shift portion).

The plurality of elements is not limited provided that the plurality of elements serves as an index when selecting accuracy information. The plurality of elements may be defined as having a parallel relationship, and any one of the plurality of elements having a parallel relationship may be selected depending on the execution target program. According to this configuration, since any one of the plurality of elements having a parallel relationship is selected depending on the execution target program, a suitable element that corresponds to the execution target program can be easily selected from a number of elements.

In addition, each of the plurality of elements having a parallel relationship may be associated with a subdivided plurality of sub elements. In this configuration, a specific element is selected depending on the execution target program from the plurality of elements having a parallel relationship, and a sub element is further selected in accordance with a method for specifying the information used in the execution target program from sub elements that are associated with the selected element. In other words, computational processing of a plurality of information for specifying the information used in the execution target program may be required. In such cases, the more complex this type of computation is, the larger the computational error becomes. But there is no computational error if the information can be directly used without performing a computation.

Thus, different methods for specifying the information used in the execution target program have different elements to be referenced as factors that lower accuracy. Hence, if the plurality of elements having a parallel relationship is classified into sub elements, and the sub elements are constituted as elements that correspond to the methods for specifying the information used in the execution target program, the sub element can be selected in accordance with the specification method when the information used in the execution target program is calculated. The reliability can also be accurately specified based on the accuracy information of the selected sub element.

The reliability specified can be utilized in various forms. For example, the processing content of the execution target program may be determined depending on the specified reliability. In other words, if erroneous information is used in the execution target program, there is a possibility that the driving support cannot be suitably executed, such as when the information is used to perform driving support and results in an erroneous control. However, if the processing content can be determined in accordance with the reliability, the driving support can be performed while keeping a negative effect that occurs when erroneous information is used in the program within an allowable range.

Note that to determine the processing content of the execution target program depending on the reliability, whether to implement at least one or more functions practicable by the execution target program may be determined, and in the case of implementation, which function to implement may be specified to determine the processing content for implementation. As a consequence, if the reliability of the information used in the program is low, it is possible to suppress a negative effect caused by considering such information correct and using such information to perform driving support.

Further, the reliability is not limited provided that it is an index that specifies the preciseness of information used in the execution target program. When a plurality of information is used to perform driving support, a reliability may be individually specified for each piece of information or a reliability for all the information may be comprehensively determined. A configuration for the latter may weight the reliability depending on the importance of each piece of information. For example, the reliability is specified for each piece of information used in the execution target program. Then, based on the weighted result of weighting each reliability in accordance with the importance of the information used in the execution target program, the processing of the execution object is determined from a plurality of driving support processing.

In other words, when using a plurality of information to perform driving support, the importance of such information often differs. For example, in a braking control in a curve segment, the use of an erroneous curvature radius when determining a target vehicle speed lowers the probability of achieving the control purpose. However, even if an erroneous start position of the curve segment is used to determine the timing to start braking, the deceleration amount will only slightly vary over the course of the braking control and there is little effect on the probability of achieving the control purpose. Thus, the effect of certain information, if erroneous, on the driving support often differs from the effect of other information, if erroneous, on the driving support.

If the reliability is weighted in accordance with the importance of the information used in the execution target program, the weighted result that is obtained based on the weight addition is a sum that incorporates the importance. Thus, in a configuration that associates the weighted result and the processing content and determines the processing content of the execution target program depending on the specified reliability, it is possible to determine the processing content performed by the execution target program in accordance with the importance of the information used in the execution target program.

As an example of a configuration for determining the processing content performed by the execution target program, a configuration may be used that increases the number of functions to be executed by the execution target program as the reliability increases. Specifically, when the reliability of the information used in the program is high, more precise driving support can be performed compared to when the reliability is low. Therefore, regardless of what type of driving support is assumed, a higher reliability of the information used in the program is accompanied by a lower probability of performing erroneous support. Hence, in a configuration where the execution target program can execute a plurality of functions that corresponds to a plurality of driving support, by increasing the number of functions allowed to be executed in accordance with the reliability, it is possible to perform a wider variety of driving support when the probability of performing erroneous driving support is small. Note that the number of functions may be counted in various ways, and a configuration may be used that counts each purpose of the driving support as one function, for example.

The technique for selecting the accuracy information for specifying a reliability based on an element that corresponds to the type of execution target program can also be applied in the forms of a program and a method. Moreover, the device, the program, and the method as described above include various types of embodiments. The present invention may be implemented in a stand-alone device, and it may be implemented through parts used in common with respective components provided in the vehicle. For example, it is possible to provide a navigation device that is equipped with the device described above, and to provide the method and the program as well. The present invention may also be modified as desired, such as by providing a portion of it in the form of software and a portion of it in the form of hardware, for example. The present invention may also be practiced in the form of a storage medium (computer readable medium) for a program that controls the device. Obviously, such a software storage medium may be a magnetic storage medium, and it may also be a magneto optical storage medium. Furthermore, any storage medium that is developed henceforth can also be considered to be exactly the same.

Further features and usabilities follow from the description of embodiments referring to the drawings, of which:
FIG. 1 is a block diagram of a navigation device that includes a reliability specifying device;
FIGS. 2A and 2B are flowcharts that show a driving support content determination process;
FIG. 3 is a drawing that shows an example of a curve segment; and
FIG. 4A is a drawing that shows an example of a road having a stop line, and FIG. 4B is a drawing that shows an example of a road for which route guidance is provided.

The embodiments will be described in the following order.
(1) Configuration of Navigation Device
   (1-1) Accuracy Information
   (1-2) Driving Support Content Determination Process
(2) Examples
   (2-1) Deceleration Control in Curve Segment
   (2-2) Deceleration Control Before Arriving at Stop Line
   (2-3) Guidance for Upcoming Intersection
(3) Other Embodiments

### (1) Configuration of Navigation Device

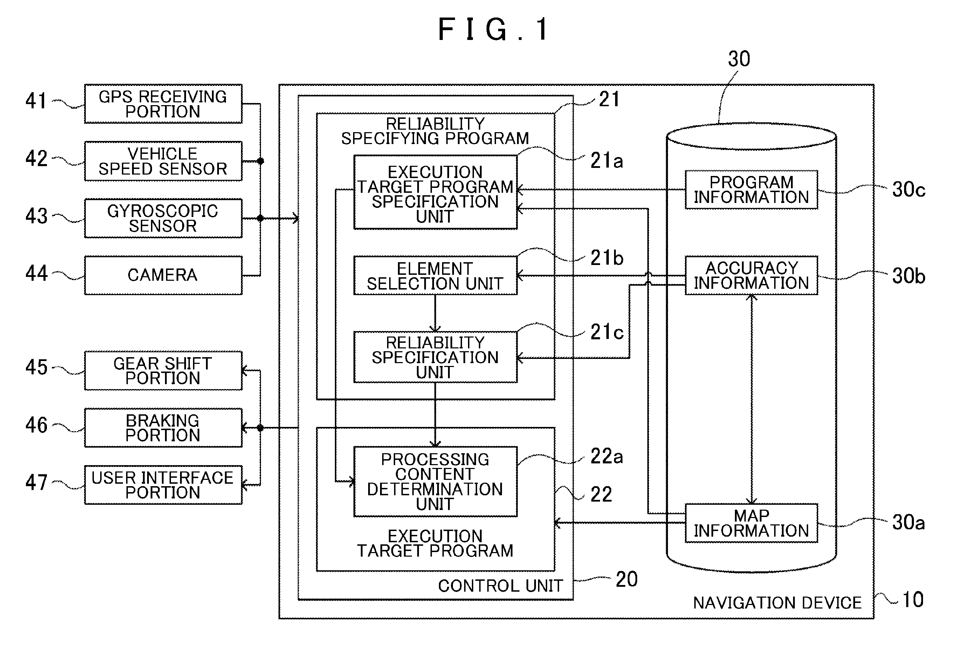

FIG. 1 is a block diagram that shows the configuration of a navigation device 10 that includes a reliability specifying device. The navigation device 10 includes a storage medium 30 and a control unit 20 that includes a CPU, a RAM, a ROM, and the like. The control unit 20 can execute programs that are stored in the storage medium 30 and the ROM. In the present embodiment, a reliability specifying program 21 and various types of programs are such programs that may be executed by the control unit 20. The reliability specifying program 21 includes functions for specifying an execution target program from the various programs for performing driving support stored in the storage medium 30 of the navigation device 10, and for specifying a reliability of information used in processing therefor. In FIG. 1, the actual execution of a program specified as an execution target program to be executed by the control unit 20 is shown as an execution target program 22. In the present embodiment, the programs execute processing for performing vehicle driving support, and include functions for executing various types of processing that correspond to the reliability of map information 30a and information that shows a vehicle position identified by a sensor.

The map information 30a is used for identifying the vehicle position and providing vehicle route guidance. The map information 30a includes node data that indicate nodes that are set on the roads that the vehicle travels, shape interpolation data that indicates the shapes of the roads between the nodes, link data that indicate connections between the nodes; data that indicate the roads and the features around them (such as white lines and crosswalks on the roads), and the like. The node data also include information that indicates the number of lanes on the roads between adjacent nodes. In the present embodiment, the map information 30a is defined per section (mesh). The map information 30a is managed at an information center by a map information administrator. Namely, the administrator creates the map information 30a based on information that specifies features measured by a measurer and information that shows maps (called sources) distributed for unmeasured sections, and the map information 30a is accumulated in a storage medium of the information center. The latest map information at the time of manufacture of the navigation device 10 is stored in the storage medium 30 as the map information 30a. The map information 30a can be updated using a portable storage medium or through communications at a timing desired by the user.

The vehicle in the present embodiment (the vehicle installed with the navigation device 10) includes a GPS receiving portion 41, a vehicle speed sensor 42, a gyroscopic sensor 43, a camera 44, a gear shift portion 45, a braking portion 46, and a user interface portion 47. The functions of the reliability specifying program 21 and the functions of the various types of programs are implemented by coordinated operation among the various portions and the control unit 20.

The GPS receiving portion 41 receives radio signals from GPS satellites and outputs, through an interface that is not shown in the drawing, information for computing a current position of the vehicle. The control unit 20 acquires the current position of the vehicle by receiving such information. The vehicle speed sensor 42 outputs a signal that corresponds to the rotational speed of a wheel of the vehicle. The control unit 20 acquires the speed of the vehicle by receiving the signal through an interface that is not shown in the drawing. The gyroscopic sensor 43 outputs a signal that corresponds to an angular velocity of the vehicle. The control unit 20 acquires the direction in which the vehicle is traveling by receiving the signal through an interface that is not shown in the drawing. The vehicle speed sensor 42 and the gyroscopic sensor 43 are used to correct the current position of the vehicle that is specified by the output signal from the GPS receiving portion 41. The current position of the vehicle is also corrected as necessary based on the driving path of the vehicle.

The camera 44 is attached to the vehicle so as to include the road behind the vehicle in its field of view and outputs image data that shows an image taken. The control unit 20 acquires such image data through an interface that is not shown in the drawing, and converts the image in order to detect a feature on the road and specify a relative distance between the feature and the vehicle.

The gear shift portion 45 includes a stepped transmission with a torque converter that has a plurality of gear speeds, such as six forward speeds, one reverse speed, and the like. The gear shift portion 45 can transmit the driving force of an engine to the wheel of the vehicle while using the gear ratios that correspond to the various gear speeds to regulate the engine rotational speed. Through an interface that is not shown in the drawing, the control unit 20 outputs a control signal for switching the gear speed, and the gear shift portion 45 can receive the control signal and switch the gear speed. In the present embodiment, as the gear speed increases to a higher gear, such as from the first forward speed towards the sixth forward speed, the gear ratio becomes smaller.

The braking portion 46 includes a device that controls a wheel cylinder pressure, which regulates the degree of deceleration realized by brakes that are mounted in the vehicle wheels. The control unit 20 outputs a control signal to the braking portion 46 to regulate the wheel cylinder pressure. If the control unit 20 outputs a control signal to the braking portion 46 to increase the wheel cylinder pressure, the braking force of the brakes is increased and the vehicle is decelerated.

The user interface portion 47 allows input of the driver's instructions and provides various types of information to the driver. Although not shown, the user interface portion 47 includes a touch panel display, switches, a speaker, and the like. The control unit 20 outputs various types of guidance through the output of control signals to the user interface portion 47.

The control unit 20 executes the reliability specifying program 21 to specify the reliability of information used in an execution target program. For this purpose, the reliability specifying program 21 includes an execution target program specification unit 21a, an element selection unit 21b, and a reliability specification unit 21c. The execution target program 22 also includes a processing content determination unit 22a. In addition, the storage medium 30 stores accuracy information 30b and program information 30c.

### (1-1) Accuracy Information

The accuracy information 30b specifies the accuracy of information used in a program for each of a plurality of elements. According to the present embodiment, accuracy is classified into elements that correspond to factors that lower the accuracy of information used in a program. Moreover, according to the present embodiment, levels are associated with the plurality of elements so that the plurality of elements have a hierarchical structure, and accuracy information is associated with the elements at the lowest level. The accuracy information is not limited to any form so long as the accuracy information specifies the preciseness of information used in a program. The accuracy information may be a value that specifies a numerical error or an index that specifies preciseness (e.g. information that indicates preciseness at a plurality of levels).

Table 1 is an example of the accuracy information 30b. Table 1 shows elements that are associated with information used in a program arranged such that the higher levels are located on the left side of the table, and also shows the specific units of the accuracy information associated with the elements at the lowest level. In the present embodiment, as shown in Table 1, information used in a program is constituted from vehicle position information and from map information. Moreover, in the present embodiment, the vehicle position information is specified depending on a relative relationship between the vehicle and a feature around the vehicle, and is specified based on the measurement values of various types of sensors. Specifically, the vehicle position information is: information that specifies a distance from a feature, such as a structure or crosswalk on the road, to the vehicle (a feature-to-vehicle distance); information that specifies a driving lane currently traveled by the vehicle (a traveled driving lane); and information that specifies a road found by matching processing (a matched road). Thus, in the accuracy information 30b, feature-to-vehicle distance accuracy, traveled driving lane identification accuracy, and matched road identification accuracy are considered elements of the accuracy information, and the accuracy information is associated with each of the elements.

The map information is various types of information specified by the map information 30a described above, with the map information update frequency and the map information error forming the accuracy information 30b. In the present embodiment, the elements are arranged in a hierarchy to further divide the map information. Specifically, the map information update frequency is an element associated with the map information. This element is further divided into information gathering frequency, information correction frequency in the information center, and information correction frequency in the vehicle, which are subdivided elements of the accuracy information. The accuracy information is associated with each of the elements, i.e., the information gathering frequency, the information correction frequency in the information center, and the information correction frequency in the vehicle. The map information error is divided into average error and maximum error, with the average error and the maximum error both further subdivided into field measurement error, source information error, information input error, computational error, and information expression form error. The accuracy information is associated with each of the subdivided elements.

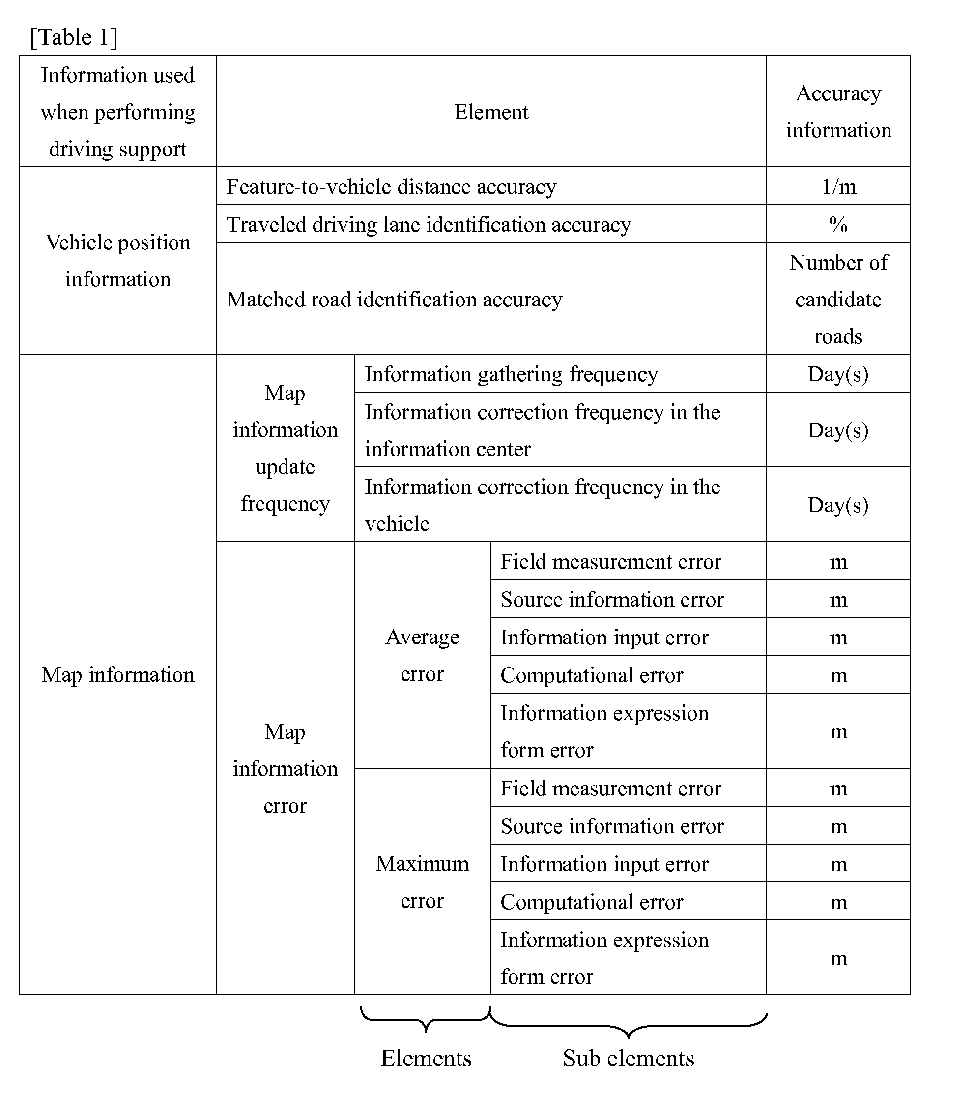

Note that, in the present embodiment, due to the hierarchical structure of the elements, an element that corresponds to a level below a particular element is called a sub element of that element. In the accuracy information 30b of the present embodiment, the accuracy information that specifies the accuracy of the vehicle position information is defined in association with a feature. For example, the accuracy information that indicates the feature-to-vehicle distance accuracy is defined in association with a feature for which the accuracy is specified, whereas the accuracy information that indicates the traveled driving lane identification accuracy and the matched road identification accuracy is defined in association with a road for which the accuracy is specified. Moreover, in the accuracy information 30b of the present embodiment, the accuracy information that indicates the accuracy of the map information is defined in association with a section. That is, because the map information 30a is defined per section, in the accuracy information 30b as well, the accuracy information is defined per section to match the sections in the map information 30a. As described above, the accuracy information 30b is defined in association with the map information 30a.

Table 1 shows the specific units of the accuracy information, wherein 1/m indicates the accuracy information defined in terms of the inverse of the error in units of meters, % indicates the accuracy information defined based on probability, and the number of candidate roads indicates the accuracy information defined based on the number of roads considered to be matching candidates that exist within a prescribed distance from the vehicle. In addition, m indicates the accuracy information defined in terms of an error in units of meters, and day(s) indicates the accuracy information defined based on the update frequency of information in units of days.

Specifically, the accuracy information that corresponds to the feature-to-vehicle distance accuracy indicates the inverse of the sum of an error in the vehicle position (m) based on the GPS receiving portion 41, the vehicle speed sensor 42, and the gyroscopic sensor 43, and an error in the feature recognition distance (m) based on the camera 44. That is, the error in the feature-to-vehicle distance includes both an error in the feature position and an error in the vehicle position. Therefore, the error when the vehicle position is specified based on the output signals of the GPS receiving portion 41, the vehicle speed sensor 42, and the gyroscopic sensor 43 is identified in advance. Likewise, the error when the feature position is specified based on an image taken by the camera 44 is identified in advance. The inverse of the sum of both errors is then found and used as the accuracy information for the feature-to-vehicle distance accuracy.

The accuracy information that corresponds to the traveled driving lane identification accuracy indicates the probability of the driving lane being correctly identified. Specifically, if there is more than one lane on a particular road, it is possible to find the probability of the vehicle traveling in the driving lane based on a relative relationship between the vehicle and the lanes around the vehicle or the probability of the vehicle traveling in a specific lane. For example, the driving lane can be established if the boundary line of a lane on the side of the road is a solid line, if the boundary line between lanes is a dashed line, if both boundary lines on both sides of the vehicle are solid lines, or if one of the boundary lines is a solid line while the other is a dashed line. If both boundary lines on both sides of the vehicle are dashed lines and the road has three lanes, it can be established that the vehicle is traveling in the center lane. However, in the case of four or more lanes there are at least two driving lane candidates, so only the probability of the vehicle traveling in a specific lane is found.

For example, if both boundary lines on both sides of the vehicle are dashed lines and there are four lanes, the vehicle is traveling in either of the two center lanes. Whether the boundary lines on both sides of the vehicle are solid or dashed lines is identified based on images taken by the camera 44. Thus, in the present embodiment, the accuracy information that corresponds to the traveled driving lane identification accuracy is a value that is the inverse product of the number of candidate roads on which the vehicle may be traveling and the recognition rate of lane boundary lines by the camera 44. The accuracy information is associated with the lanes on the road and set as the accuracy information 30b. For example, if the driving lane traveled by the vehicle is on the far left or far right side, the identification accuracy of the driving lane is A, which is defined as the inverse of the number of candidate roads (1) multiplied by the recognition rate (A). If the driving lane traveled by the vehicle is one of the two center lanes on a four-lane road, the identification accuracy of the driving lane is A/2, which is defined as the inverse of the number of candidate roads (1/2) multiplied by the recognition rate (A).

The accuracy information that corresponds to the matched road identification accuracy indicates the preciseness of the matching processing that specifies the road traveled by the vehicle based on the degree of coincidence between the vehicle's driving path and the road shape. In the present embodiment, a larger number of matching candidates around the vehicle means a lower matching accuracy. Thus, the accuracy information for the matched road identification accuracy is the number of candidate roads when there are candidate roads considered to be matching candidates within a prescribed distance from the vehicle position.

The accuracy information that corresponds to the information gathering frequency indicates the frequency with which the administrator that manages the map information 30a of the navigation device 10 measures the map information (e.g. the frequency with which measurements are made by a measurer). Specifically, the average time until a measurement is made is found in terms of the number of days and used as the accuracy information for the information gathering frequency.

The accuracy information that corresponds to the information correction frequency in the information center indicates the frequency with which, at the information center that accumulates map information in a prescribed storage medium, an operation to correct the existing map information stored in the storage medium using newly gathered map information is performed. Specifically, the average time until a correction is performed is found in terms of the number of days and used as the accuracy information for the information correction frequency in the information center.

The accuracy information that corresponds to the information correction frequency in the vehicle indicates the frequency with which an operation in the vehicle to correct the existing map information 30a stored in the storage medium 30 using newly gathered map information is performed. Specifically, in the vehicle, the map information 30a stored in the storage medium 30 can be corrected using a portable storage medium or through communications, and a history of past correction operations is accumulated. Thus, the average time until a correction is performed is found in terms of the number of days and used as the accuracy information for the information correction frequency in the vehicle.

In the accuracy information 30b, the errors of values for feature position, length, and the like specified by the map information 30a are defined as divided into the average error and the maximum error. The average error is an average value of the error within the section described above, and the maximum error is the maximum value of the error in the section described above. The accuracy information that corresponds to the field measurement error is related to the map information 30a created by the above measurer, and indicates a difference between the measurement value at the time the measurer measured the feature position and length, and the feature position and length according to a geographical coordinate system serving as a reference. Specifically, the difference is calculated in terms of both the average error and the maximum error within the section, and both calculation results are used as the accuracy information for specifying the average error and the maximum error, respectively, of the field measurement error.

The accuracy information that corresponds to the source information error indicates the error related to the map information 30a created based on information specified by the source described above. Both the average error and the maximum error as defined by the source provider are found for the information specified by the source, and both are used as the accuracy information for specifying the average error and the maximum error, respectively, of the source information error.

The accuracy information that corresponds to the information input error indicates the input error when defining information for a feature specified by the map information 30a. Specifically, in the map information 30a, position and length are defined using a predetermined region of the feature as a reference. For example, a specific region such as the center or side portion of a stop line on the road is used as a reference, and the position of the reference, the length as viewed from the reference, and the like are defined. Therefore, when associating the measurement result of the measurer or the like and the feature position, the feature position will not indicate the correct position if the predetermined reference position is wrong. Thus, both the average error and the maximum error are found in advance for such an error, and used as the accuracy information for specifying the average error and the maximum error, respectively, of the information input error.

The accuracy information that corresponds to the computational error indicates an error that occurs when performing computational processing based on the map information 30a. For example, when a curvature radius is calculated from the positions of shape interpolation points set on the road, an error may occur in the computation. Thus, in the present embodiment, errors that occur when performing various types of computations are identified in advance, and both the average error and the maximum error are found in the section described above. Both errors are associated with every information-specifying method used in computations (e.g. number of arithmetic operations executed), and used as the accuracy information for specifying the average error and the maximum error, respectively, of the computational error.

The accuracy information that corresponds to the information expression form error indicates an error dependent on the number of digits and the feature position specified by the map information 30a. Specifically, in the present embodiment, the information volume of the map information 30a is configured so as to differ depending on the area, for example, depending on whether the area is densely or sparsely populated. The number of digits used in the map information 30a also differs by section. Thus, both the average error and the maximum error caused by a different number of digits used in different sections are found in advance, and used as the accuracy information for specifying the average error and the maximum error, respectively, of the information expression form error.

In the accuracy information 30b as described above, the elements are classified emphasizing the mutual independence of the accuracy information corresponding to each element. For example, a fluctuation in one of the field measurement error and the source information error will not cause a fluctuation in the other. Thus, it is sufficient to only correct the information per element when correcting the accuracy information 30b, and when specifying the reliability in consideration of all the accuracy information 30b for a plurality of elements, the reliability can be specified by considering a minimum number of elements.

### (1-2) Driving Support Content Determination Process

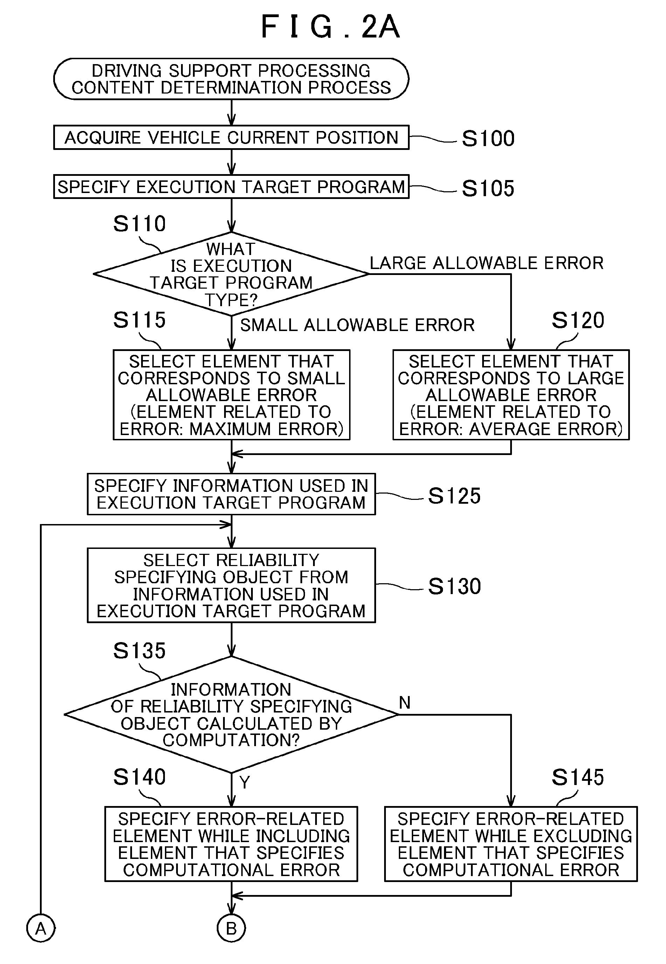

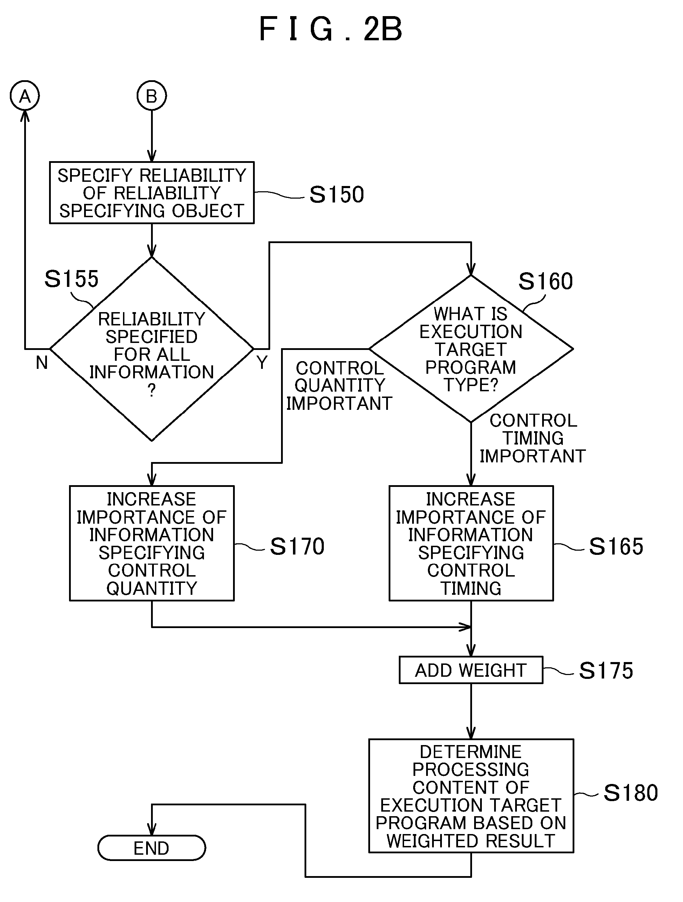

A driving support content determination process performed by the reliability specifying program 21 and the processing content determination unit 22a of the execution target program 22 will be described next. The reliability specifying program 21 is executed at a prescribed timing (e.g. every 100 ms). FIGS. 2A and 2B are flowcharts that show the driving support content determination process executed by the reliability specifying program 21.

The execution target program specification unit 21a is a module that implements in the control unit 20 a function that specifies the execution target program to be executed. In the driving support content determination process, first, the control unit 20 executes the processing of the execution target program specification unit 21a to acquire the vehicle current position (S100), and specify the execution target program (S105).

Specifically, at S100, the control unit 20 identifies the current position of the vehicle on the basis of the map information 30a and the output signals of the GPS receiving portion 41, the vehicle speed sensor 42, and the gyroscopic sensor 43. In addition, at S105, the control unit 20 acquires information that specifies the conditions (road shape and the like) of roads within a prescribed range from the current position of the vehicle based on the map information 30a, and acquires information that specifies vehicle conditions (such as a vehicle speed found based on the vehicle speed sensor 42 or the like). The control unit 20 then specifies a program to be executed under the road conditions and vehicle conditions as the execution target program. Note that information that specifies correspondence between the road conditions, the vehicle conditions, and the execution target programs is stored in the storage medium 30 as the program information 30c. In the present embodiment, the execution target program is selected from a plurality of programs. However, if there is only one program, it may be determined at S105 whether a prescribed requirement to execute the program has occurred (e.g. whether the vehicle current position according to map matching processing matches the road), and the program may be designated as the execution target program if the requirement for execution has occurred.

The element selection unit 21b is a module that implements in the control unit 20 a function that selects an element that corresponds to the type of execution target program from a plurality of elements. In other words, once the program is specified, the program processing establishes the information used in the program. An element to be referenced in order to indicate the accuracy of information used in the program may be specified in advance. Thus, in the present embodiment, programs are classified in advance so that programs using the accuracy information of common elements are of the same type. Specifically, in the present embodiment, the types of execution target programs are classified based on an allowable error of the information used in the program. Thus, the control unit 20 executes the processing of the element selection unit 21b to determine whether the execution target program is a type of program in which the allowable error of information used in the execution target program is small, or a type of program in which the allowable error of information used in the execution target program is large (S110).

If it is determined at S110 that the execution target program is a type of program in which the allowable error of the information used is small, the control unit 20 references the accuracy information 30b and selects the element that corresponds to a small allowable error (S115). However, if it is determined at S110 that the execution target program is a type of program in which the allowable error of the information used is large, the control unit 20 references the accuracy information 30b and selects the element that corresponds to a large allowable error (S120). In the present embodiment, the elements of the accuracy information 30b related to the map information error are classified into the maximum error and the average error. If the information used in the execution target program has a small allowable error, the maximum error is selected as the element related to the map information error (S115). However, if the information has a large allowable error, the average error is selected as the element related to the map information error (S120).

In other words, if the information used in the program becomes less correct as the allowable error is increasingly exceeded, there is a possibility that the driving support cannot be suitably executed. Driving support whose program uses information having a small allowable error can have a large negative effect when the driving support is not appropriate. For example, the execution of a braking control and a shift control is assumed in a curve segment (a road formed with a clothoid segment before and after a fixed curvature segment). In this case, the braking control is a control in which the braking portion 46 starts to perform braking using the brakes from a start position of the clothoid segment, with the aim of traveling at a constant vehicle speed while the lateral acceleration of the vehicle is a prescribed value (e.g. 0.4 G) in the fixed curvature segment. The shift control is a control that generates engine braking by changing the gear ratio from a time point that is a prescribed period before the vehicle arrives at the start position of the clothoid segment (e.g. two seconds before the vehicle arrives at the start position of the clothoid segment), with the aim of traveling at a constant vehicle speed and the lateral acceleration of the vehicle reaching a prescribed value (e.g. 0.2 G) in the fixed curvature segment. Comparing these braking and shift controls, the lateral acceleration in the fixed curvature segment according to the braking control is larger than the lateral acceleration in the fixed curvature segment according to the shift control, and the former has a smaller difference than the latter with the limit lateral acceleration generated by lateral slipping. Accordingly, there is a higher urgency for the braking control when executed, which is accompanied by a greater sense of incongruity and a larger negative effect when an erroneous control is performed. The shift control is configured to assist deceleration using engine braking caused by changing the gear ratio. However, the deceleration of the vehicle is highly arbitrary at a specific gear ratio in view of the fact that the driver can perform braking using the brakes. Thus, the allowable error related to the start position of the fixed curvature segment and the curvature radius of the road is small in the braking control, and large in the shift control.

The maximum error for the map information error is a maximum value assuming that there is an error, and therefore, no erroneous control occurs so long as the maximum error does not exceed the allowable error. However, in driving support such as the shift control where the deceleration, which is a control quantity that depends on a combination with the brakes, can greatly fluctuate (that is, in driving support where it is not critical to precisely match the targeted control quantity), setting a requirement that the maximum error not exceed the allowable error is excessively harsh. Hence, if the information used in the execution target program has a small allowable error, the maximum error is selected as the error-related element, whereas if the information used in the execution target program has a large allowable error, the average error is selected as the error-related element. Note that, any classification of the program types depending on the magnitude of allowable error may be used, provided that the classification is determined in advance in accordance with the degree of a negative effect if an erroneous control is performed. At S115 and S120, the control unit 20 selects either the maximum error or the average error for the error-related element, without selecting a sub element thereof or establishing the lowest element. However, the sub element is selected by later processing. In other words, the maximum error and the average error are elements having a parallel relationship, and following the selection of one, a sub element of a lower level thereof is selected by processing described later. Meanwhile, regarding the map information update frequency, at S115 and S120, the lowest element that corresponds to the type of execution target program is selected.

The reliability specification unit 21c is a module that implements in the control unit 20 a function that specifies the reliability of information used in the execution target program based on the accuracy information of the selected element. Specifically, the control unit 20 executes the processing of the reliability specification unit 21c to specify the information used in the execution target program (S125), and specifies the reliability of the identified information at S130 to S155. Note that, in the present embodiment, the elements for specifying the reliability of the vehicle position information directly correspond to the vehicle position information. Therefore, at S125, the control unit 20 selects the element that specifies the accuracy of the vehicle position information used when performing driving support. If there is a plurality of vehicle position information used when performing driving support, the control unit 20 identifies the plurality of vehicle position information used when performing driving support, and selects elements that specify the accuracy of each of the plurality of vehicle position information.

Specifically, at S125, the control unit 20 identifies the driving support performed by the processing of the execution target program, and specifies information to be referenced for performing the driving support as information used in the execution target program. For example, if the driving support performs a vehicle control based on the distance from a feature, the control unit 20 specifies the use of information showing the distance from the feature as the vehicle position information. The control unit 20 then selects an element that specifies the accuracy of the information showing the distance from the feature as the element for specifying the reliability.

Next, the control unit 20 executes the processing of the reliability specification unit 21c to select an object whose reliability is to be specified (hereinafter referred to as a reliability specifying object) from the information used in the execution target program (S130). That is, in order to specify the reliability using the loop process at S130 to S155, if only one piece of information is used in the execution target program, that information is selected as the reliability specifying object; however, if there is a plurality of information used in the execution target program, information whose reliability is not specified in the loop process at S130 to S155 among the plurality of information is selected as the reliability specifying object.

In order to specify the accuracy information to be referenced, the control unit 20 then executes the processing of the element selection unit 21b to determine whether the information of the reliability specifying object is calculated by computation (S135). If it is determined that the information of the reliability specifying object is calculated by computation, the control unit 20 executes the processing of the element selection unit 21b to specify the error-related element such that an element that specifies the computational error is included (S140). However, if it is determined at S135 that the information of the reliability specifying object is not calculated by computation, the control unit 20 executes the processing of the element selection unit 21b to specify the error-related element while excluding the element that specifies the computational error from the error-related elements (S145).

Namely, at S115 and S120 above, an element from either the maximum error or the average error is selected. However, a sub element thereof is not selected then; the sub element is selected at S140 and S145. Specifically, in the accuracy information 30b as shown in Table 1 above, the maximum error and the average error are each subdivided into the elements of the field measurement error, the source information error, the information input error, the computational error, and the information expression form error. If the information used in the execution target program is directly specified from the map information 30a or the like and not specified by computation, such information is not affected by a computational error. Hence, if the information used in the execution target program is specified by computation, the control unit 20 selects all of the field measurement error, the source information error, the information input error, the computational error, and the information expression form error. However, if the information used in the execution target program is not specified by computation, the control unit 20 excludes the computational error and selects the field measurement error, the source information error, the information input error, and the information expression form error.

Next, the control unit 20 executes the processing of the reliability specification unit 21c to specify the reliability of the reliability specifying object (S150). According to the present embodiment, the elements specified by the accuracy information 30b have a hierarchical structure. Therefore, the accuracy information to be considered at each level is evaluated in accordance with a predetermined criterion in order to comprehensively evaluate the accuracy of a superordinate level. By repeating this operation, a comprehensive evaluation of each element is performed and reliability specified.

More specifically, the elements of the feature-to-vehicle distance accuracy, the traveled driving lane identification accuracy, and the matched road identification accuracy specified by the accuracy information 30b are elements of the lowest level. In the present embodiment, at S125, the information used in the execution target program is specified and an element corresponding to the information is selected. Therefore, at S150, the accuracy information of the selected element and a threshold value are compared to specify evaluation values at a plurality of levels for the selected element. Based on this combination, an evaluation value is specified for comprehensively evaluating the accuracy of the vehicle position information.

Table 2 shows an example of the evaluation values.

**[Table 2]**

| Evaluation value (per element) | | Evaluation value (overall evaluation) |
|---|---|---|
| Matched road identification accuracy: 2 | | |
| | Feature-to-vehicle distance accuracy: 3 | 5 |
| | Feature-to-vehicle distance accuracy: 2 | 4 |
| | Feature-to-vehicle distance accuracy: 1 | 3 |
| | Feature-to-vehicle distance accuracy: 0 | 2 |
| Matched road identification accuracy: 1 | | 1 |
| Matched road identification accuracy: 0 | | 0 |
| Matched road identification accuracy: 2 | | |
| | Traveled driving lane identification accuracy: 3 | 5 |
| | Traveled driving lane identification accuracy: 2 | 4 |
| | Traveled driving lane identification accuracy: 1 | 3 |
| | Traveled driving lane identification accuracy: 0 | 2 |
| Matched road identification accuracy: 1 | | 1 |
| Matched road identification accuracy: 0 | | 0 |

Table 2 shows evaluation values for each element on the left side, and evaluation values for comprehensively evaluating the accuracy of the vehicle position information, which is specified based on a combination of the evaluation values of the elements, on the right side.

In this example, evaluation values for the feature-to-vehicle distance accuracy are specified at four levels, 0 to 3, by comparing the inverse of the error, which is accuracy information shown in Table 1, and the threshold value. Evaluation values for the traveled driving lane identification accuracy are specified at four levels, 0 to 3, by comparing the probability, which is accuracy information shown in Table 1, and the threshold value. Evaluation values for the matched road identification accuracy are specified at three levels, 0 to 2, by comparing the number of candidate roads, which is accuracy information shown in Table 1, and the threshold value. Note that, in this case, the evaluation value is 0 if the number of candidate roads is less than one (i.e., the vehicle is not performing matching), the evaluation value is 1 if the number of candidate roads is two or more, and the evaluation value is 2 if the number of candidate roads is one.

According to Table 2, if the evaluation value of the matched road identification accuracy is 0 or 1, the evaluation value for comprehensively evaluating the accuracy of the vehicle position information is also 0 or 1. In addition, if the evaluation value of the matched road identification accuracy is 2, the evaluation value for comprehensively evaluating the accuracy of the vehicle position information is 2 to 5, taking into consideration the feature-to-vehicle distance accuracy and the traveled driving lane identification accuracy. Therefore, provided that the matched road identification accuracy is extremely precise, such as when the number of candidate roads is one, the evaluation value for comprehensively evaluating the accuracy of the vehicle position information is a value of 2 or more in consideration of other elements (feature-to-vehicle distance accuracy and traveled driving lane identification accuracy).

The elements of the information gathering frequency, the information correction frequency in the information center, and the information correction frequency in the vehicle specified by the accuracy information 30b are of the lowest level. Therefore, at S150, the accuracy information of each element is comprehensively evaluated to specify the evaluation value of the map information update frequency, which is a superordinate level element. In the present embodiment, map information to be considered new is given an evaluation value of 1, and map information to be considered old is given an evaluation value of 0. Specifically, the least number of days among the information gathering frequency, the information correction frequency in the information center, and the information correction frequency in the vehicle is the fastest update frequency of the map information 30a. Thus, D₁ is the least number of days among the information gathering frequency, the information correction frequency in the information center, and the information correction frequency in the vehicle, and Do is the number of days passed since the day the map information 30a was most recently updated by the user using a portable storage medium or through communications. If 1-(D₀/D₁) is positive, the evaluation value for comprehensively evaluating the map information update frequency is 1. If 1-(D₀/D₁) is negative, the evaluation value for comprehensively evaluating the map information update frequency is 0.

Because only one of the elements of the average error and the maximum error specified by the accuracy information 30b is selected by the processing at S115 and S120, the evaluation value for only the selected element is specified. Specifically, the accuracy information is specified at S150 for either one of the average error and the maximum error and a sub element thereof selected at either S140 or S145. Based on the accuracy information of the sub elements, the evaluation value for either the average error or the maximum error, which are on a superordinate level, is then specified as an overall evaluation related to the map information error.

Specifically, E₁ may be the accuracy information for the field measurement error, E₂ the accuracy information for the source information error, E₃ the accuracy information for the information input error, E₄ the accuracy information for the computational error, and E₅ the accuracy information for the information expression form error. In such case, if the processing at S140 is executed, five levels of evaluation values (evaluation values 0 to 4) are specified as indicating the overall evaluation related to the map information error by comparing 1/(E₁+E₂+E₃+E₄+E₅) and four levels of threshold values. However, if the processing at S145 is executed, five levels of evaluation values (evaluation values 0 to 4) are specified as indicating the overall evaluation related to the map information error by comparing 1/(E₁+E₂+E₃+E₅) and four levels of threshold values.

Once the evaluation values indicating the overall evaluation for each of the map information update frequency and the map information error, which are elements of the same level, are identified using the process described above, the evaluation value for comprehensively evaluating the accuracy of the map information is found.

Table 3 shows an example of the evaluation values for comprehensively evaluating the accuracy of the map information.

**[Table 3]**

| Evaluation value (per element) | | Evaluation value (overall evaluation) |
|---|---|---|
| Map information update frequency: 1 | | |
| | Map information error: 4 | 5 |
| | Map information error: 3 | 4 |
| | Map information error: 2 | 3 |
| | Map information error: 1 | 2 |
| | Map information error: 0 | 1 |
| Map information update frequency: 0 | | 0 |

Table 3 shows evaluation values for each element related to the map information update frequency and the map information error on the left side, and evaluation values for comprehensively evaluating the accuracy of the map information on the right side.

In this example, the evaluation value for the map information update frequency as described above is specified as 0 or 1, and the evaluation value for the map information error as described above is specified as any one of 0 to 4. According to Table 3, if the evaluation value for the map information update frequency is 0, the evaluation value for comprehensively evaluating the accuracy of the map information is 0. Alternatively, if the evaluation value for the map information update frequency is 1, the evaluation value for comprehensively evaluating the accuracy of the map information is 1 to 5. Therefore, provided that the map information is considered new, the evaluation value for comprehensively evaluating the accuracy of the map information in consideration of the map information error is set to a value of 1 or more.

After specifying the evaluation value for comprehensively evaluating the accuracy of the vehicle position information (Table 2) and the evaluation value for comprehensively evaluating the accuracy of the map information (Table 3) as described above, the control unit 20 specifies the reliability of the information that is the reliability specifying object based on a combination of these evaluation values. Namely, correspondence relationships between reliability and combinations of evaluation values are specified in advance, and the control unit 20 identifies the reliability based on the correspondence relationship. Table 4 shows an example of the correspondence relationships.

**[Table 4]**

| Evaluation value specifying overall evaluation of vehicle position information | Evaluation value specifying overall evaluation of map information | Reliability |
|---|---|---|
| 5 | 5 | 5 |
| 5 | 3 or 4 | 4 |
| 3 or 4 | 5 | 4 |
| 5 | 1 or 2 | 3 |
| 1 or 2 | 5 | 3 |
| 3 or 4 | 3 or 4 | 3 |
| 3 or 4 | 1 or 2 | 2 |
| 1 or 2 | 3 or 4 | 2 |
| 1 or 2 | 1 or 2 | 1 |
| Any | 0 | 0 |
| 0 | Any | 0 |

Thus, after the reliability of the reliability specifying object is specified at S150, the control unit 20 executes the processing of the reliability specification unit 21c to determine whether the reliability of all the information used in the execution target program has been specified (S155). If it is determined that the reliability of all the information used in the execution target program has not been specified, the process from S130 onward is repeated.

The processing content determination unit 22a of the execution target program 22 is a module that implements in the control unit 20 a function that determines the processing content of the execution target program depending on the reliability. Namely, if it is determined at S155 that the reliability of all the information used in the execution target program has been specified, the control unit 20 executes the processing of the processing content determination unit 22a to determine the processing content of the execution target program at S160 to S180.

Specifically, the control unit 20 determines whether the execution target program 22 is a type of program where a control timing is important or a type of program where a control quantity is important (S160). If it is determined at S160 that the execution target program is a type of program where the control timing is important, the control unit 20 increases the importance of information that specifies the control timing when a vehicle control is performed (S165). If it is determined at S160 that the execution target program 22 is a type of program where the control quantity is important, the control unit 20 increases the importance of information that specifies the control quantity when a vehicle control is performed (S170). The control unit 20 then adds a weight to the reliability depending on the importance (S175), and determines the processing content of the execution target program 22 based on the weighted result (S180).

In other words, reliability is specified for all information used in the execution target program 22 so that the reliability of each piece of information used when performing driving support is considered. However, the importance of the information used in the execution target program 22 differs depending on the driving support. Therefore, in the present embodiment, the reliability is weighted in accordance with the importance of the information to perform an overall evaluation.

More specifically, the programs in the present embodiment are also classified in advance depending on which element should be given more emphasis in order to achieve the purpose of the driving support. For example, a program for performing the braking control described above is a program that performs driving support to determine a target vehicle speed based on the curvature radius of the fixed curvature segment and brakes the vehicle accordingly. In this type of program, the use of an erroneous curvature radius, which is a control quantity that corresponds to the control purpose, when determining the target vehicle speed of the vehicle lowers the probability of achieving the control purpose. However, the use of an erroneous start position of the clothoid segment or an error in the timing to start braking only result in slight variations in vehicle deceleration and do not affect the probability of achieving the control purpose. Thus, it is critical in this type of program to perform the control so as to achieve the correct control quantity. Therefore, the information that specifies the control quantity (e.g. information to be referenced for specifying a constant vehicle speed, in order to travel at the constant vehicle speed through the fixed curvature segment) has a high degree of importance, which increases the weight of the reliability of such information.

A program for performing the shift control is a program that performs driving support so as to complete shifting before the start position of the clothoid segment, such that a gear ratio capable of generating a target deceleration is achieved in the vehicle by determining a shift timing based on the start position of the clothoid segment and performing the shift control. In this type of program, an error is included in the deceleration used when determining the gear ratio so that even if the determined gear ratio is erroneous, the brakes or the like can be used to assist braking, although there is no control capable of achieving the desired deceleration by changing the gear ratio alone. However, the use of an erroneous start position of the clothoid segment when determining the timing to start shifting and shifting the gear ratio after the start position of the clothoid segment results in erratic vehicle behavior. Thus, it is critical in this type of program to determine the control timing and perform the shift control such that correct shifting is achieved before arriving at the start position of the clothoid segment. Therefore, the information that specifies the control timing (e.g. information to be referenced for specifying a specific point, in order to perform the shift control when the vehicle passes the specific point) has a high degree of importance, which increases the weight of the reliability of such information.

As described above, in the present embodiment, the weight of the reliability is adjusted and the processing content of the execution target program 22 is determined based on the weighted result. Thus, the processing content of the execution target program can be determined based on a result that evaluates reliability in accordance with the importance of the information used in the execution target program.

Note that various types of configurations may be utilized for determining the processing content of the execution target program 22 based on the weighted reliability result. For example, a plurality of functions that corresponds to a plurality of driving support may be executed by the execution target program 22, and the execution of a greater number of functions (more driving support) may be allowed in accordance with a larger weighted reliability result (which corresponds to higher reliability). More specifically, the braking control program is assumed to have a configuration that implements in the control unit 20 the functions of outputting a control signal to the braking portion 46 to perform braking, and outputting a control signal to the user interface portion 47 to provide guidance for prompting braking. With this configuration, if the weighted reliability result is large, the above two functions of braking by the braking portion 46 and guidance by the user interface portion 47 are allowed to be executed. However, if the weighted reliability result is small, only one function (e.g. guidance by the user interface portion 47) selected from among the above two functions is allowed to be executed. Likewise, in the shift control program, which executes shifting by the gear shift portion 45 and guidance by the user interface portion 47, the two functions are allowed to be executed if the weighted reliability result is large, and one function among the two functions is allowed to be executed if the weighted reliability result is small. According to this configuration, a wider variety of driving support can be performed if the probability of performing erroneous driving support is small. Obviously, instead of being implemented by the execution target program 22, the processing for weighting the reliability of each piece of information used in the execution target program may be implemented by the reliability specification unit 21c or through the use of various other configurations.

The accuracy information 30b is not dependent on the type of program and is defined as a set of information shared by the programs. Therefore, reliability may be specified based on the set of information shared by the programs, which can suppress the volume of the accuracy information 30b more than a configuration that defines the accuracy information for every driving support. The accuracy of the information used in the program is defined for each of a plurality of elements in the accuracy information 30b. Therefore, the accuracy information to be referenced can be specified by selecting an element. Further, since the accuracy information to be referenced for specifying the reliability can be found by specifying an element that corresponds to the type of execution target program, the accuracy information to be referenced can be easily found. It is also possible to specify the reliability using necessary and sufficient processing without referencing accuracy information that does not need to be referenced in order to specify the reliability. As described above, accuracy information for specifying the reliability of information used when performing various driving support can be efficiently managed, and the accuracy information can be easily selected.

If the processing content can be determined depending on reliability, it is possible to suppress an erroneous control, or determine whether to perform driving support knowing in advance the effect of an erroneous control if one occurs, or determine the content of such driving support. Thus, driving support can be performed while keeping a negative effect that occurs when erroneous information is used in the program within an allowable range.

### (2) Examples

### (2-1) Deceleration Control in Curve Segment

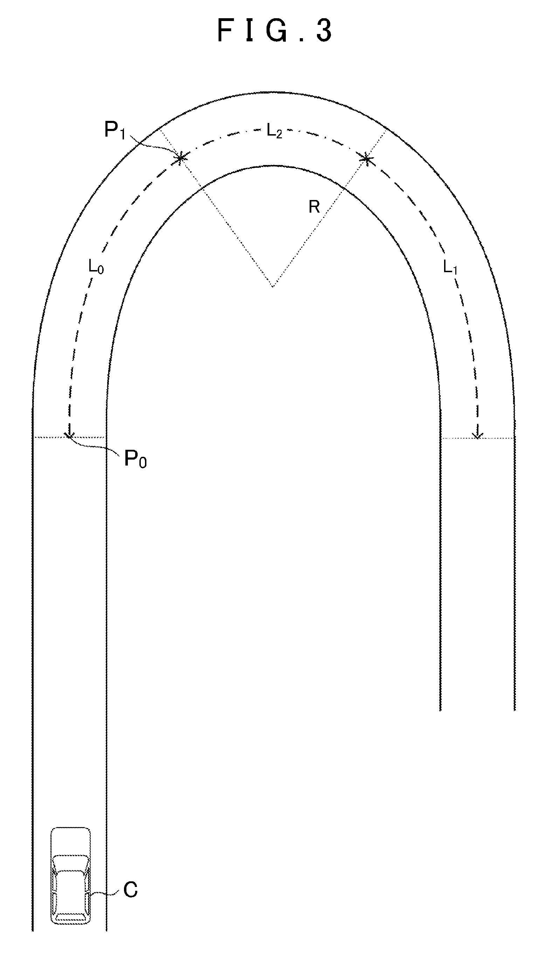

An embodiment having the above configuration will be explained next using a deceleration control in a curve segment as an example. FIG. 3 is a drawing that shows an example of a curve segment that includes clothoid curve segments and a fixed curvature segment ahead of a vehicle C. Note that, in FIG. 3, arrows L₀, L₁ shown with dotted lines indicate the clothoid segments in front of and behind the fixed curvature segment, and an arrow L₂ shown with a dashed-dotted line indicates the fixed curvature segment. Also, in FIG. 3, P₀ indicates the start position of the clothoid segment before reaching the fixed curvature segment, and P₁ indicates the start position of the fixed curvature segment.

This example assumes a configuration in which deceleration support and shift support are performed as driving support. Specifically, it is assumed that the configuration shown in FIG. 1 is capable of executing the braking control program and the shift control program and that these programs have been specified as execution target programs at S105 in FIG. 2A.

According to this configuration, the purpose of the braking control program is to perform the braking control such that the vehicle runs at a constant vehicle speed V through the fixed curvature segment from the start position P₁ of the fixed curvature segment onward. Specifically, the constant vehicle speed V is found as V=(G·R)^{1/2} based on a lateral acceleration G in the fixed curvature segment and a curvature radius R of the fixed curvature segment. The control unit 20 executes the processing of the program to perform a control that starts vehicle deceleration from the start position P₀ of the clothoid segment and runs the vehicle at the constant vehicle speed V with the specific lateral acceleration G at the start position P₁ of the fixed curvature segment.

The braking control program is a program that controls the vehicle speed, and is also a type of program in which the allowable error of information used in the program is small because of the large effect an erroneous control can have. Also, as described above, the braking control program is a type of program where the control quantity is important. The information used in the program is constituted by information that specifies the start position P₀ of the clothoid segment, and the start position P₁ and the curvature radius R of the fixed curvature segment.

Thus, if the braking control program is the execution target program, it is determined at S110 in FIG. 2A that the execution target program is a type of program having a small allowable error. Therefore, at S115, the maximum error is selected as the error-related element for consideration. At S125, the information that specifies the start position P₀ of the clothoid segment and the start position P₁ and the curvature radius R of the fixed curvature segment is specified as the information used in the execution target program.

Note that, at S115, an element related to the map information error and an error related to the map information update frequency are selected as elements of the accuracy information, and at S125, an element related to the vehicle position information is selected. Specifically, according to S115 and S125, the traveled driving lane identification accuracy, the matched road identification accuracy, the information gathering frequency, the information correction frequency in the information center, and the information correction frequency in the vehicle are selected as elements of the accuracy information regarding the start position P₀ of the clothoid segment and the start position P₁ and the curvature radius R of the fixed curvature segment.

In the loop process at S130 to S155, processing is performed to specify each of the start position P₀ of the clothoid segment and the start position P₁ and the curvature radius R of the fixed curvature segment as reliability specifying objects. Here, the start position P0 of the clothoid segment and the start position P1 of the fixed curvature segment are directly specified from the node information of the map information 30a. Therefore, at S135, it is determined that these are not calculated by computation, and at S145, the error-related elements are specified while excluding the element that specifies the computational error. That is, the field measurement error, the source information error, the information input error, and the information expression form error are specified as the error-related elements.

At S150, reliability is specified based on the traveled driving lane identification accuracy, the matched road identification accuracy, the information gathering frequency, the information correction frequency in the information center, and the information correction frequency in the vehicle, as well as the field measurement error, the source information error, the information input error, and the information expression form error corresponding to the maximum error. Specifically, the control unit 20 specifies the current position of the vehicle based on the output signals of the GPS receiving portion 41, the vehicle speed sensor 42, and the gyroscopic sensor 43, and specifies that the road on which the vehicle is currently traveling is a one-lane road as shown in FIG. 3 based on the map information 30a. The control unit 20 then references the accuracy information 30b and specifies the accuracy information for the traveled driving lane identification accuracy with regard to the one-lane road, and specifies the evaluation value for the traveled driving lane identification accuracy as any one of 0 to 3.

The control unit 20 also references the map information 30a to determine whether there are candidate roads around the road on which the vehicle is currently traveling (i.e., the road found by matching processing). In addition, the control unit 20 references the accuracy information 30b and specifies the accuracy information for the matched road identification accuracy that corresponds to the number of candidate roads, and specifies the evaluation value for the matched road identification accuracy as any one of 0 to 2. The control unit 20 then specifies the evaluation value for comprehensively evaluating the accuracy of the vehicle position information based on Table 2.

The control unit 20 references the map information 30a to specify the section containing the current position of the vehicle. In addition, the control unit 20 references the accuracy information 30b to specify the accuracy information for the information gathering frequency, the information correction frequency in the information center, and the information correction frequency in the vehicle with regard to the section, and identifies the least number of days D₁. Further, the control unit 20 specifies the number of days passed Do from the day the map information 30a was updated by the user using a portable storage medium or through communications. If 1-(D₀/D₁) is positive, the control unit 20 sets the evaluation value for comprehensively evaluating the map information update frequency to 1. If 1-(D₀/D₁) is negative, the control unit 20 sets the evaluation value for comprehensively evaluating the map information update frequency to 0.

The control unit 20 further references the accuracy information 30b to specify the accuracy information E₁ for the field measurement error, the accuracy information E₂ for the source information error, the accuracy information E₃ for the information input error, and the accuracy information E₅ for the information expression form error, which correspond to the maximum error. The evaluation value for comprehensively evaluating the map information error is specified as any one of 0 to 4 by comparing 1/(E₁+E₂+E₃+E₅) and four levels of threshold values.

Based on Table 3 and the evaluation values for comprehensively evaluating the map information update frequency and the map information error specified as described above, the control unit 20 specifies the evaluation value for comprehensively evaluating the accuracy of the map information. Moreover, based on Table 4 and the evaluation values for comprehensively evaluating the accuracy of the vehicle position information and the accuracy of the map information, the control unit 20 specifies the reliability of the start position P₀ of the clothoid segment and the start position P₁ of the fixed curvature segment.

Meanwhile, the curvature radius R is specified by identifying a circle that passes through three adjacent shape interpolation points from information that indicates the shape interpolation points of the map information 30a. The radius of the circle is considered to be the curvature radius R. Thus, at S135, it is determined that the fixed curvature radius R is calculated by computation, and at S140, the computational error associated with a specific method for calculating the circle radius from three points, the field measurement error, the source information error, the information input error, and the information expression form error are specified as the error-related elements.

Therefore, the processing executed at S150 in order to specify the reliability of the curvature radius R differs from the processing executed at S150 in order to specify the reliability of the start position P₀ of the clothoid segment and the start position P₁ of the fixed curvature segment in that the computational error is included among the error-related elements. Specifically, at S150 where processing is executed in order to specify the reliability of the curvature radius R, the control unit 20 references the accuracy information 30b to specify the accuracy information E₁ for the field measurement error, the accuracy information E₂ for the source information error, the accuracy information E₃ for the information input error, the accuracy information E₄ for the computational error, and the accuracy information E₅ for the information expression form error, which correspond to the maximum error. The evaluation value for comprehensively evaluating the map information error is then specified as any one of the five levels of evaluation values 0 to 4 by comparing 1/(E₁+E₂+E₃+E₄+E₅) and four levels of threshold values. Other computations are similar to the processing executed at S150 in order to specify the reliability of the start position P₀ of the clothoid segment and the start position P₁ of the fixed curvature segment.

After the reliability of each of the start position P₀ of the clothoid segment and the start position P₁ and the curvature radius R of the fixed curvature segment is specified, the control unit 20 determines the execution target program type at S160. The control unit 20 then determines that the braking control program is a type of program where the control quantity is important, and proceeds to execute the processing at S170. In the braking control program, as described above, the constant vehicle speed V is specified as V=(G·R)^{1/2} based on the curvature radius R of the fixed curvature segment. Therefore, the constant vehicle speed V is a parameter that specifies a control quantity of the braking control that corresponds to the control purpose. Meanwhile, the braking control program starts vehicle deceleration from the start position P₀ of the clothoid segment, and runs the vehicle at the constant vehicle speed V with a specific lateral acceleration G at the start position P₁ of the fixed curvature segment. Thus, the start position P₀ of the clothoid segment and the start position P₁ of the fixed curvature segment are parameters that specify control timing.

Hence, at S170, the control unit 20 sets the importance of the curvature radius R higher than that of the start position P₀ of the clothoid segment and the start position P₁ of the fixed curvature segment, and adds weight at S175. At S180, the processing content of the execution target program is determined based on the weighted result. In this example, the braking control is executed when the reliability exceeds a prescribed threshold, and the braking control is not executed if the reliability is less than the prescribed threshold. Thus, the processing content of the execution target program can be determined such that an erroneous control does not occur.

The purpose of the shift control program is to perform a shift control, in preparation before the start of deceleration, so as to achieve the gear ratio required for generating a prescribed deceleration from the start position P₀ of the clothoid segment onward. According to this configuration, the shift control program starts deceleration from the start position P₀ of the clothoid segment onward, and specifies a deceleration for traveling at the constant vehicle speed V through the fixed curvature segment from the start position P₁ of the fixed curvature segment onward and a gear ratio required for generating the deceleration. The shift control is started when the vehicle arrives at the start position P₀ of the clothoid segment.

The shift control program is a program that controls the vehicle speed, and is also a type of program in which the allowable error of information used in the program is large because of the small effect on the vehicle when the timing to change the gear ratio is slightly off. Also, as described above, the shift control program is a type of program where the control timing is important. The information used in the program is constituted by information that specifies the start position P₀ of the clothoid segment, and the start position P₁ and the curvature radius R of the fixed curvature segment. The importance of the start position P₀ of the clothoid segment, which indicates the shift timing, is higher than that of the start position P₁ and the curvature radius R of the fixed curvature segment.

Thus, if the shift control program is the execution target program, the average error is selected as the error-related element for consideration at S120 following S110 in FIG. 2A. In the loop process at S125 to S155, aside from the average error being selected as the error-related element, the processing is the same as that for the braking control program.

After the reliability of each of the start position P₀ of the clothoid segment and the start position P₁ and the curvature radius R of the fixed curvature segment is specified, the control unit 20 determines at S160 that the execution target program is a type of program where the control timing is important. Therefore, the control unit 20 sets the importance of the start position P₀ of the clothoid segment, which is a parameter that specifies the control timing, higher than that of the start position P₁ and the curvature radius R of the fixed curvature segment, and adds weight at S175. At S180, the control unit 20 then determines whether to execute the shift control, that is, the execution target program, based on the weighted result.

### (2-2) Deceleration Control Before Arriving at Stop Line

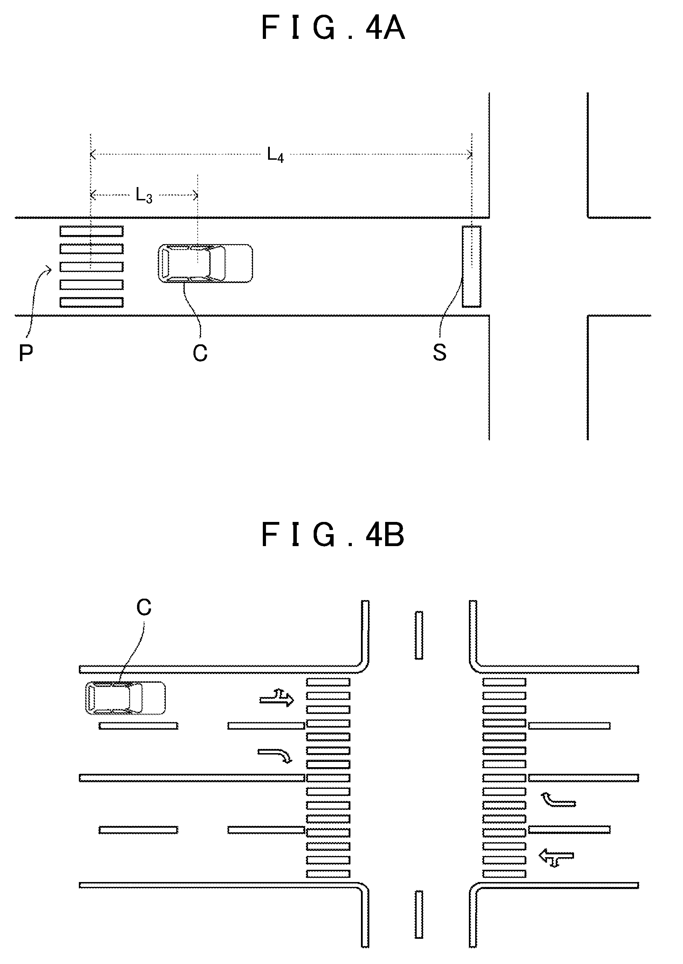

Next, an example of a deceleration control before arriving at a stop line will be described. FIG. 4A shows a one-lane road that has a stop line S for stopping the vehicle C before the vehicle C enters an intersection. In the example of FIG. 4A, on the road traveled by the vehicle C there is a crosswalk P behind the vehicle C.

This example assumes a configuration in which deceleration support is performed as driving support. Specifically, it is assumed that the configuration shown in FIG. 1 is capable of executing a program for performing a deceleration control and the deceleration control program has been specified as the execution target program at S105 in FIG. 2A.

According to this configuration, the control unit 20 executes the processing of the deceleration control program to reference the map information 30a and, based on the position of the crosswalk P and the position of the stop line S, acquire a length L₄ therebetween. The control unit 20 also detects the crosswalk P based on the output of the camera 44, and detects a length L₃ from the crosswalk P to the vehicle C, based on a distance between the crosswalk P and the vehicle C when the crosswalk P was detected and a distance traveled by the vehicle C after the crosswalk P was detected by the camera 44.

Deceleration is started when the difference between the length L₄ and the length L₃ (L₄-L₃) is equal to or less than a prescribed distance, and the deceleration control is performed from that time until the vehicle C arrives at the stop line S. That is, a control is performed in order to reduce the vehicle current speed to zero before the vehicle C arrives at the stop line S.

In this example as well, the deceleration control program is a type of program in which the allowable error of the information used in the program is small, similar to the above example, and is a type of program where the control quantity is important. Further, the information used in the program includes the positions of the crosswalk P and the stop line S specified by the map information 30a and the length L₃ from the crosswalk P to the vehicle C.

In this example, if the crosswalk P is within a prescribed range ahead on the one-lane road traveled by the vehicle C, the deceleration control program becomes the execution target program. Therefore, the maximum error is selected as the error-related element for consideration at S115 following S110 in FIG. 2A. In addition, at S115, an element related to the map information error and an element related to the map information update frequency are selected as elements of the accuracy information, and at S125, an element related to the vehicle position information is selected. Specifically, according to S115 and S125, the traveled driving lane identification accuracy, the matched road identification accuracy, the information gathering frequency, the information correction frequency in the information center, the information correction frequency in the vehicle, and the maximum error are selected as elements that specify the accuracy of the positions of the crosswalk P and the stop line S. The information that specifies the length L₃ from the crosswalk P to the vehicle C is found without referencing the map information 30. Therefore, the feature-to-vehicle distance accuracy and the matched road identification accuracy are selected as elements that indicate the accuracy of the information the specifies the length L₃ from the crosswalk P to the vehicle C.

Because the information showing the positions of the crosswalk P and the stop line S is not specified by computation, following the determination at S135, the control unit 20 specifies the error-related elements while excluding the element that specifies the computational error. That is, the field measurement error, the source information error, the information input error, and the information expression form error are specified as the error-related elements. Note that, although the length L₃ from the crosswalk P to the vehicle C is also not information specified by computation, the map information 30a is not referenced in order to specify the length L₃ from the crosswalk P to the vehicle C. Therefore, the processing at S150 to S145 is omitted for the length L₃ from the crosswalk P to the vehicle C. After elements are selected for the positions of the crosswalk P and the stop line P, and the length L₃ from the crosswalk P to the vehicle C as described above, the control unit 20 specifies the reliability at S150.

Specifically, for the information that specifies the positions of the crosswalk P and the stop line S, the control unit 20 specifies the current position of the vehicle based on the output signals of the GPS receiving portion 41, the vehicle speed sensor 42, and the gyroscopic sensor 43, and specifies that the road on which the vehicle is currently traveling is a one-lane road based on the map information 30a. The control unit 20 then references the accuracy information 30b and specifies the accuracy information for the traveled driving lane identification accuracy with regard to the one-lane road, and specifies the evaluation value for the traveled driving lane identification accuracy as any one of 0 to 3.

The control unit 20 also references the map information 30a to determine whether there are candidate roads around the road on which the vehicle is currently traveling. In addition, the control unit 20 references the accuracy information 30b and specifies the accuracy information for the matched road identification accuracy that corresponds to the number of candidate roads, and specifies the evaluation value for the matched road identification accuracy as any one of 0 to 2. The control unit 20 then specifies the evaluation value for comprehensively evaluating the accuracy of the vehicle position information based on Table 2.

The control unit 20 references the map information 30a to specify the section containing the road on which the crosswalk P and the stop line S are located. In addition, the control unit 20 references the accuracy information 30b to specify the accuracy information for the information gathering frequency, the information correction frequency in the information center, and the information correction frequency in the vehicle with regard to the section, and identifies the least number of days D₁. Further, the control unit 20 specifies the number of days passed Do from the day the map information 30a was updated by the user using a portable storage medium or through communications. If 1-(D₀/D₁) is positive, the control unit 20 sets the evaluation value for comprehensively evaluating the map information update frequency to 1. If 1-(D₀/D₁) is negative, the control unit 20 sets the evaluation value for comprehensively evaluating the map information update frequency to 0.

The control unit 20 further references the accuracy information 30b to specify the accuracy information E₁ for the field measurement error, the accuracy information E₂ for the source information error, the accuracy information E₃ for the information input error, and the accuracy information E₅ for the information expression form error, which correspond to the maximum error. The evaluation value for comprehensively evaluating the map information error is specified as any one of 0 to 4 by comparing 1/(E₁+E₂+E₃+E₅) and four levels of threshold values.

Based on Table 3 and the evaluation values for comprehensively evaluating the map information update frequency and the map information error specified as described above, the control unit 20 specifies the evaluation value for comprehensively evaluating the accuracy of the map information. Moreover, based on Table 4 and the evaluation values for comprehensively evaluating the accuracy of the vehicle position information and the accuracy of the map information, the control unit 20 specifies the reliability of the information that indicates the positions of the crosswalk P and the stop line S.

The elements of the accuracy information for the information that indicates the length L₃ from the crosswalk P to the vehicle C are the feature-to-vehicle distance accuracy and the matched road identification accuracy. Therefore, the control unit 20 references the accuracy information 30b to specify the accuracy information for the feature-to-vehicle distance accuracy for the vehicle C, and specifies the evaluation value of the feature-to-vehicle distance accuracy as any one of 0 to 3. The control unit 20 also references the map information 30a to determine whether there are candidate roads around the road on which the vehicle is currently traveling. In addition, the control unit 20 references the accuracy information 30b and specifies the accuracy information for the matched road identification accuracy that corresponds to the number of candidate roads, and specifies the evaluation value for the matched road identification accuracy as any one of 0 to 2. The control unit 20 then specifies the evaluation value for comprehensively evaluating the accuracy of the vehicle position information based on Table 2. The information that indicates the length L₃ from the crosswalk P to the vehicle C is not information specified by referencing the map information 30a. Therefore, the control unit 20 uses the evaluation value for comprehensively evaluating the accuracy of the vehicle position information as the reliability of the information that indicates the length L₃ from the crosswalk P to the vehicle C.

Further, in this example, the information used in the execution target program includes the positions of the crosswalk P and the stop line S and the length L₃ from the crosswalk P to the vehicle C. Because the positions of the crosswalk P and the stop line S and the length L₃ from the crosswalk P to the vehicle C are referenced in order to specify the control quantity, equal weights are set for the information at S160 and S170. Consequently, at S180, the control unit 20 adds a weight to the reliability specified at S150, and determines the processing content of the execution target program based on the weighted result. In this example, the deceleration control is performed when the reliability is high, and guidance is provided to show that there is a stop line ahead when the reliability is low.

### (2-3) Guidance for Upcoming Intersection

Next, an example of guidance for an upcoming intersection will be described. FIG. 4B shows an example of the vehicle C traveling on a road with two lanes in both directions. This example assumes a configuration in which guidance for an intersection ahead of the vehicle is provided as driving support. Specifically, it is assumed that the configuration shown in FIG. 1 is capable of executing a program for providing guidance for an upcoming intersection and the upcoming-intersection guidance program has been specified as the execution target program at S105 in FIG. 2A.

In this configuration, the control unit 20 executes the processing of the upcoming intersection guidance program to acquire information that specifies a preset road in the vehicle C, and to provide guidance by identifying the lane for driving the vehicle C along the route ahead of the vehicle C and the travel direction at the intersection.

In this example, the upcoming-intersection guidance program provides guidance for the route at the intersection, but does not determine a control quantity or the like that varies depending on the position of the intersection and the like. Therefore, this is a type of program in which the allowable error of the information used in the program is large. Also, since it is important to provide the guidance before the vehicle arrives at the intersection, the upcoming-intersection guidance program is a type of program in which the control timing is important. In addition, the information used in the program is information that specifies the intersection and information that specifies the current position of the vehicle (road with the driving lane in which the vehicle is traveling).

In this example, the upcoming-intersection guidance program is the execution target program if there is an intersection within a prescribed range ahead of the vehicle C. Further, the upcoming-intersection guidance program is a type of program in which the allowable error of the information used in the program is large. Therefore, the average error is selected as the error-related element for consideration at S120 following S110 in FIG. 2A. At S120, an element related to the map information error and an error related to the map information update frequency are selected as elements of the accuracy information, and at S125, an element related to the vehicle position information is selected. Specifically, according to S120 and S125, the traveled driving lane identification accuracy, the matched road identification accuracy, the information gathering frequency, the information correction frequency in the information center, the information correction frequency in the vehicle, and the maximum error are selected.

Because the information specifying the intersection and the current position of the vehicle is not specified by computation, following the determination at S135, the control unit 20 specifies the error-related elements while excluding the element that specifies the computational error. That is, the field measurement error, the source information error, the information input error, and the information expression form error are specified as the error-related elements.

At S150, the control unit 20 specifies the reliability based on the traveled driving lane identification accuracy, the matched road identification accuracy, the information gathering frequency, the information correction frequency in the information center, and the information correction frequency in the vehicle, as well as the field measurement error, the source information error, the information input error, and the information expression form error corresponding to the average error.

Specifically, the control unit 20 specifies the current position of the vehicle based on the output signals of the GPS receiving portion 41, the vehicle speed sensor 42, and the gyroscopic sensor 43, and specifies the number of lanes on the road that the vehicle is currently traveling based on the map information 30a. The control unit 20 then references the accuracy information 30b and specifies the accuracy information for the traveled driving lane identification accuracy with regard to the multi-lane road, and specifies the evaluation value for the traveled driving lane identification accuracy as any one of 0 to 3.

The control unit 20 also references the map information 30a to determine whether there are candidate roads around the road on which the vehicle is currently traveling. In addition, the control unit 20 references the accuracy information 30b and specifies the accuracy information for the matched road identification accuracy that corresponds to the number of candidate roads, and specifies the evaluation value for the matched road identification accuracy as any one of 0 to 2. The control unit 20 then specifies the evaluation value for comprehensively evaluating the accuracy of the vehicle position information based on Table 2.

The control unit 20 references the map information 30a to specify the section where the road on which the vehicle is traveling and the intersection ahead of the vehicle are located. In addition, the control unit 20 references the accuracy information 30b to specify the accuracy information for the information gathering frequency, the information correction frequency in the information center, and the information correction frequency in the vehicle with regard to the section, and identifies the least number of days D₁. Further, the control unit 20 specifies the number of days passed Do from the day the map information 30a was updated by the user using a portable storage medium or through communications. If 1-(D₀/D₁) is positive, the control unit 20 sets the evaluation value for comprehensively evaluating the map information update frequency to 1. If 1-(D₀/D₁) is negative, the control unit 20 sets the evaluation value for comprehensively evaluating the map information update frequency to 0.

The control unit 20 further references the accuracy information 30b to specify the accuracy information E₁ for the field measurement error, the accuracy information E₂ for the source information error, the accuracy information E₃ for the information input error, and the accuracy information E₅ for the information expression form error, which correspond to the average error. The evaluation value for comprehensively evaluating the map information error is specified as any one of 0 to 4 by comparing 1/(E₁+E₂+E₃+E₅) and four levels of threshold values.

Based on Table 3 and the evaluation values for comprehensively evaluating the map information update frequency and the map information error specified as described above, the control unit 20 specifies the evaluation value for comprehensively evaluating the accuracy of the map information. Moreover, based on Table 4 and the evaluation values for comprehensively evaluating the accuracy of the vehicle position information and the accuracy of the map information, the control unit 20 specifies the reliability of the information that indicates the intersection and the current position of the vehicle.

Further, in this example, both the information that specifies the intersection and the current position of the vehicle have the same level of importance. Therefore, the processing at S160 to S170 is omitted, and at S180 the control unit 20 determines the processing content of the execution target program based on the reliability of the information that specifies the intersection and the reliability of the information that specifies the current position of the vehicle. In this example, guidance regarding a lane change and guidance regarding the travel route are provided when the reliability is high. When the reliability is low, the guidance regarding the travel route is provided, but the guidance regarding a lane change is not.

### (3) Other Embodiments

The present embodiment described above is only one example for practicing the present invention, and various other embodiments may also be used so long as they select accuracy information for specifying a reliability based on elements that correspond to the type of execution target program. For example, the program may be executed by a control unit inside the vehicle and implement a prescribed function that supports vehicle driving. In addition, the driving support is support for the driver driving the vehicle, and the quality of the support may vary depending on the accuracy of the information used in the execution target program. Therefore, in addition to the examples described above, various programs may be used for performing various types of driving support, such as guidance that provides a reminder, warning, assistance, or intervention in a vehicle control.

Note that, in the above embodiment, the types of execution target programs are classified based on items of importance in the control and the allowable error of the information used in the program. However, various other classifications may be used. For example, depending on the degree of effect caused by performing erroneous support during various types of driving support, erroneous support cannot be tolerated for some support, while erroneous support can be tolerated for others if performed. If erroneous support is performed in a control for increasing safety, safety may be reduced. But if erroneous support is performed in a control for increasing convenience, convenience may be reduced but safety is not affected. Therefore, a configuration may be used that classifies programs that perform controls for increasing safety and programs that perform controls for increasing convenience as different types. Further, programs may be classified into different types when the control object that is subject to the control based on the processing of the program is different (e.g. when the control objects are the control unit and the gear shift portion).

Moreover, when a plurality of information is used to perform driving support, in addition to a configuration that comprehensively determines reliability by individually specifying the reliability of all the information, a configuration may be used that individually evaluates the reliability of each piece of information.

Various configurations may be used for the accuracy information 30b in addition to the configuration described above. For example, according to the above configuration, the accuracy information 30b includes elements that directly correspond to the form of information used in the program (e.g. the feature-to-vehicle distance) as elements that specify the accuracy of the vehicle position information. However, the accuracy of the vehicle position information may be expressed based on the accuracy of a sensor. A configuration may be used that includes the accuracy of identifying the vehicle position using the GPS receiving portion, the vehicle speed sensor 42, and the gyroscopic sensor 43, and the accuracy of measuring acceleration using an acceleration sensor as elements that specify the accuracy of the vehicle position information.

A configuration may be used that includes the invariance of information included in the map information 30a as an element that indicates the accuracy of the map information. For example, a configuration may be used that includes the possibility of road shape changes from road work or the construction of new roads, the frequency of such change, and the like as accuracy information that specifies such invariance in the accuracy information 30b.

Table 5 is an example of the accuracy information 30b. Table 5 shows hierarchical elements that are associated with information used in a program arranged such that the higher levels are located on the left side of the table, and also shows the specific units of the accuracy information associated with the elements at the lowest level.

**[Table 5]**

| Information used when performing driving support | Element | | | | Accuracy information |
|---|---|---|---|---|---|
| Map information | Road invariance | Road work frequency | Change frequency | Curve segment shape change freq. | Cases/year |
| | | | | Slope segment shape change freq. | Cases/year |
| | | | | Lane type change freq. | Cases/year |
| | | | | Solid structure type change freq. | Cases/year |
| | | | | Paint mark type change freq. | Cases/year |
| | | | Addition frequency | Curve segment addition freq. | Cases/year |
| | | | | Slope segment addition freq. | Cases/year |
| | | | | Lane addition freq. | Cases/year |
| | | | | Solid structure addition freq. | Cases/year |
| | | | | Paint mark addition freq. | Cases/year |
| | | | Elimination frequency | Curve segment elimination freq. | Cases/year |
| | | | | Slope segment elimination freq. | Cases/year |
| | | | | Lane elimination freq. | Cases/year |
| | | | | Solid structure elimination freq. | Cases/year |
| | | | | Paint mark elimination freq. | Cases/year |
| | | Interannual change rate | Maintenance frequency | Paint mark maintenance freq. | Cases/year |
| | | | | Uneven road surface maintenance freq. | Cases/year |
| | | | Traffic volume | | Vehicles/year |
| | | Traffic accident frequency | | | Cases/year |
| | | Congestion frequency | | | Cases/year |
| | | Road improvement request frequency | | | Cases/year |

Table 5 illustrates an example of the accuracy information 30b related to road invariances in the case where road invariances form elements that specify the accuracy of the map information. That is, since the information related to roads specified by the map information 30a is information that specifies the road shape, the road position, and the like at a certain time, road work or the construction of new roads may create circumstances in which the road specified by the map information 30a differs from the actual road. Hence, the accuracy information 30b is configured such that a plurality of indices that specifies the possibility of a road changing is defined as a plurality of elements, and the accuracy information for each of the plurality of elements is defined per predetermined road segment. Note that the road segment is not limited so long as the road segment is defined as a set of roads estimated to share a road invariance. Various configurations may be employed; for example, the road segment may be formed by segments (links) having nodes as end points, or the road segment may be formed by roads with the same name (e.g. the Tomei Expressway or the like), or the road segment may be formed by roads in between specific facilities (e.g. interchanges or the like) on roads with the same name. Obviously, the elements that specify invariances of the road segment may be defined per section in the map information 30a as in the above embodiment.

In the example shown in Table 5, a road work frequency, an interannual change rate, a traffic accident frequency, a congestion frequency, and a road improvement request frequency are the elements that specify road invariances. The road work frequency is subdivided into a change frequency, an addition frequency, and an elimination frequency. The change frequency is further subdivided into elements related to a curve segment shape change frequency, a slope segment shape change frequency, a lane type change frequency, a solid structure type change frequency, and a paint mark type change frequency. The accuracy information is associated with each of the subdivided elements.

The addition frequency is further subdivided into elements related to a curve segment addition frequency, a slope segment addition frequency, a lane addition frequency, a solid structure addition frequency, and a paint mark addition frequency. The accuracy information is associated with each of the subdivided elements. The elimination frequency is further subdivided into elements related to a curve segment elimination frequency, a slope segment elimination frequency, a lane elimination frequency, a solid structure elimination frequency, and a paint mark elimination frequency. The accuracy information is associated with each of the subdivided elements.

The interannual change rate is subdivided into a maintenance frequency and a traffic volume, with the maintenance frequency further subdivided into a paint mark maintenance frequency and an uneven road surface maintenance frequency. With regard to the interannual change rate, the elements of the paint mark maintenance frequency, the uneven road surface maintenance frequency, and the traffic volume are elements of the lowest level, and the accuracy information is associated with each of these elements. In addition, the elements of the traffic accident frequency, the congestion frequency, and the road improvement request frequency are elements of the lowest level, and the accuracy information is associated with each of the elements of the traffic accident frequency, the congestion frequency, and the road improvement request frequency.

Table 5 also shows the specific units of the accuracy information in a column on the right side, wherein cases/year indicates the accuracy information defined based on an annual number of incidents, and vehicles/year indicates the accuracy information defined based on an annual number of traveling vehicles. Note that the number of road work and maintenance cases is defined by counting all work from the start of the road work or maintenance until the end of such road work or maintenance as one case. The number of congestion cases is defined by counting each time the number of vehicles per unit time exceeds a threshold and subsequently falls below the threshold as one case.

Specifically, a road segment for which the accuracy is specified by the accuracy information 30b may include a curve segment whose curvature per unit distance is equal to or greater than a prescribed threshold, and the curvature may be modified by road work performed in the curve segment. Information that specifies the annual average number of cases of such modification road work is accuracy information that corresponds to the curve segment shape change frequency. Information that specifies the annual average number of cases of road work that adds a curve segment road is accuracy information that corresponds to the curve segment addition frequency. In addition, information that specifies the annual average number of cases of road work that eliminates a curve segment road is accuracy information that corresponds to the curve segment elimination frequency.

Alternatively, a road segment for which the accuracy is specified by the accuracy information 30b may include a slope segment whose change in altitude per unit distance is equal to or greater than a prescribed threshold, and the shape of the slope segment may be modified by road work performed in the slope segment. Information that specifies the annual average number of cases of such modification road work is accuracy information that corresponds to the slope segment shape change frequency. Information that specifies the annual average number of cases of road work that adds a slope segment road is accuracy information that corresponds to the slope segment addition frequency. In addition, information that specifies the annual average number of cases of road work that eliminates a slope segment road is accuracy information that corresponds to the slope segment elimination frequency.

Further, road work may be performed that changes the lane type of an existing road to another lane type in a road segment for which the accuracy is specified by the accuracy information 30b. Information that specifies the annual average number of cases of such modification road work is accuracy information that corresponds to the lane type change frequency. Information that specifies the annual average number of cases of road work that adds a lane is accuracy information that corresponds to the lane addition frequency. In addition, information that specifies the annual average number of cases of road work that eliminates a lane (reduces the number of lanes) is accuracy information that corresponds to the lane elimination frequency.

Further, in a road segment for which the accuracy is specified by the accuracy information 30b, road work may change a solid structure (such as a traffic signal or a traffic sign) in the road segment or around the road segment to another type (may change the type of traffic signal, for example). Information that specifies the annual average number of cases of such modification road work is accuracy information that corresponds to the solid structure type change frequency. Information that specifies the annual average number of cases of road work that adds a solid structure is accuracy information that corresponds to the solid structure addition frequency. In addition, information that specifies the annual average number of cases of road work that eliminates a solid structure (reduces the number of solid structures) is accuracy information that corresponds to the solid structure elimination frequency.

Further, in a road segment for which the accuracy is specified by the accuracy information 30b, road work may be performed that changes a paint mark (such as a travel direction indicator arrow or a stop line) in the road segment to another type (may change the direction of a travel direction indicator arrow due to a change in the restriction of the travel direction, for example). Information that specifies the annual average number of cases of such modification road work is accuracy information that corresponds to the paint mark type change frequency. Information that specifies the annual average number of cases of road work that adds a paint mark is accuracy information that corresponds to the paint mark addition frequency. In addition, information that specifies the annual average number of cases of road work that eliminates a paint mark is accuracy information that corresponds to the paint mark elimination frequency.

Maintenance is performed when paint marks on the road deteriorate or the road surface becomes increasingly uneven. Therefore, in the case of maintenance to refresh paint marks or repair uneven road surfaces in a road segment for which the accuracy is specified by the accuracy information 30b, the interannual change rate can be said to increase as the annual average number of cases of such maintenance increases. Hence, in the present example, information that specifies the annual average number of cases of maintenance for paint marks on the road segment is accuracy information that corresponds to the paint mark maintenance frequency, and information that specifies the annual average number of cases of maintenance for uneven road surfaces is accuracy information that corresponds to the uneven road surface maintenance frequency.

Further, as the number of vehicles traveling a road increases, the pace of interannual change of the road per unit time also rapidly increases. Therefore, in the present example, information that specifies the annual average number of vehicles passing through a road segment for which the accuracy is specified by the accuracy information 30b is accuracy information that corresponds to the traffic volume.

When the possibility of a traffic accident on a road is high, or when the possibility of congestion is high, or when road improvements are frequently requested by residents living around the road or the like, there is a higher possibility that the road shape will be changed or that another modification will be made to the road, such as changing, adding, or eliminating features on the road. Hence, in the present example, the traffic accident frequency that specifies the annual average number of traffic accidents, the congestion frequency that specifies the annual average number of times congestion occurred, and the road improvement request frequency that specifies the annual average number of road improvement requests received by an official body or the like are used as accuracy information in a road segment for which the accuracy is specified by the accuracy information 30b.

In a configuration that includes information such as the above in the accuracy information 30b, by selecting an element depending on the execution target program, it is possible to acquire a reliability that incorporates a road invariance. In other words, in a configuration similar to that shown in FIG. 1, the information shown in Table 5 is included in the accuracy information 30b and the control unit 20 executes processing similar to that in FIG. 2. If an invariance of the map information should be considered in the execution target program, at S125, the elements shown in Table 5 are selected depending on the execution target program. When the elements shown in Table 5 are selected, at S150, the reliability is specified based on the accuracy information that corresponds to these elements. In addition, at S160 to S180, the control unit 20 adds a weight that corresponds to these elements, and determines the processing content of the execution target program accordingly.

Specifically, the control unit 20 sorts through the elements shown in Table 5 depending on the type of execution target program. For example, if the execution target program is a type of program that uses information related to road paint marks to perform processing, at S125, the control unit 20 specifies that the execution target program uses information related to road paint marks. As elements that specify the accuracy of information related to paint marks, the paint mark type change frequency, the paint mark addition frequency, the paint mark elimination frequency, the paint mark maintenance frequency, the traffic volume, the traffic accident frequency, the congestion frequency, and the road improvement request frequency are selected from the accuracy information shown in Table 5.

Next, the control unit 20 performs the processing at S130 to S155. If the reliability of the information related to paint marks is specified, at S150, the control unit 20 specifies the evaluation value related to the road invariance based on the accuracy information of the elements selected at S125. Specifically, the control unit 20 references the accuracy information 30b, and acquires accuracy information a (cases/year) of the paint mark type change frequency, accuracy information b (cases/year) of the paint mark addition frequency, accuracy information c (cases/year) of the paint mark elimination frequency, accuracy information d (cases/year) of the paint mark maintenance frequency, accuracy information e (vehicles/year) of the traffic volume, accuracy information f (cases/year) of the traffic accident frequency, accuracy information g (cases/year) of the congestion frequency, and accuracy information h (cases/year) of the road improvement request frequency.

Thus, the evaluation value related to the road work frequency is (a+b+c), the evaluation value related to the interannual change rate is (e/d), the evaluation value related to the traffic accident frequency is f, the evaluation value related to the congestion frequency is g, and the evaluation value related to the road improvement request frequency is h. Further, the evaluation value related to the road invariance is ((1/(a+b+c))+(1/(e/d))+(1/f)+(1/g)+(1/h)). Obviously, in the above computations of the evaluation values, each piece of information may be multiplied by a prescribed coefficient and the products summed, and the units may be adjusted (e.g. evaluating the traffic volume in terms of thousands of vehicles per year).

After the evaluation value related to the road invariance is specified as described above, the control unit 20 specifies the reliability of the information related to paint marks in consideration of the evaluation values related to the map information error, the map information update frequency, and the like. Thus, at S150 to S175, the processing content of the execution target program is determined by weighting the reliability in accordance with the importance of the information used in the execution target program. As described above, provided that a configuration is used that includes the accuracy information for each element related to the road invariance in the accuracy information 30b, the reliability of the information used in the execution target program can be evaluated even when the information used in the execution target program is affected by changes made to the road.

Obviously, various types of evaluation methods may be employed as the reliability evaluation method. The reliability may be comprehensively evaluated in consideration of the evaluation values related to the map information error, the map information update frequency, and the like as described above, and the processing content of the execution target program may be determined by considering the evaluation value related to the road invariance as the reliability related to the road invariance. For example, a configuration may be employed in which the evaluation value related to the road invariance is evaluated as one of three levels; the processing performed by the execution target program is terminated in the case of the evaluation value with the highest possibility of the road changing, and guidance is provided to the user by the execution target program in the case of the evaluation value with the next highest possibility of the road changing, and a vehicle control is executed by the execution target program in the case of the evaluation value with the lowest possibility of the road changing.

Note that the example as shown in Table 5 above may also be applied to various other embodiments. For example, if the information used differs depending on the purpose of the execution target program, elements may be selected that correspond to each piece of information. As a more specific configuration, information that specifies uneven locations on roads may be included in the map information 30a. In this assumed configuration, the control unit 20 references the map information 30a to specify the uneven locations, and can execute an execution target program that performs a suspension control in accordance with the unevenness and an execution target program that performs a suspension and shift ratio control in accordance with the road curvature. In this case, a configuration is assumed in which one or both of the road work frequency and the interannual change rate is considered to evaluate the reliability. In such a configuration, elements that affect the road unevenness must be selected for the execution target program that performs a suspension control in accordance with the road unevenness. Therefore, the control unit 20 references the accuracy information regarding both the elements of the road work frequency and the interannual change rate to specify the reliability. Meanwhile, only elements that affect the road curvature must be selected for the execution target program that performs a suspension and shift ratio control in accordance with the road curvature. Therefore, the control unit 20 selects the road work frequency as the element whose accuracy information should be referenced and does not select the interannual change rate. According to this configuration, the reliability of the information used in the execution target program can be suitably evaluated.

The accuracy information for specifying the reliability of the information used in a program may be defined by various other types of information. In a vehicle installed with the navigation device 10 having, for example, a configuration in which the vehicle position is measured based on the output signals of the GPS receiving portion 41, the vehicle speed sensor 42, and the gyroscopic sensor 43, and the position of a feature or the like on the road is measured based on the output signal of the camera 44, a configuration is assumed in which information that specifies the positions of the measured features or the like on the road is added to the map information 30a.

According to such a configuration, a specific error of the vehicle position based on the output signals of the GPS receiving portion 41, the vehicle speed sensor 42, and the gyroscopic sensor 43 can indicate the accuracy of the vehicle position, and a specific error of the position of a feature or the like based on the output signal of the camera 44 can indicate the accuracy of the position of the feature or the like. Therefore, these errors can be considered the accuracy information of information that specifies roads and information that specifies the positions of features or the like, which have been added to the map information 30a. In addition, a vehicle travel frequency corresponds to the measurement frequency of the vehicle position and the position of a feature or the like. Therefore, this measurement frequency can be considered the accuracy information that specifies the map information update frequency.

Hence, regarding the accuracy information 30b, the specific error of the vehicle position based on the output signals of the GPS receiving portion 41, the vehicle speed sensor 42, and the gyroscopic sensor 43, the specific error of the position of a feature or the like based on the output signal of the camera 44, and the vehicle travel frequency are included in the accuracy information. The control unit 20 thus selects an element that corresponds to the execution target program, and specifies the reliability using the accuracy information of the selected element. According to this configuration, the processing content of the execution target program can be determined depending on the reliability of the information that specifies the position of a feature or the like and the road information measured by vehicle travel. Further, in the present example, both information defined in advance in the map information 30a and information acquired through vehicle travel can coexist as information related to the same road. Therefore, a configuration is possible in which the reliability of the former and the latter is compared, and the information having the higher reliability is used in the execution target program.

In addition, according to the above embodiment, the reliability of the information used in the execution target program is specified by the control unit 20, and the reliability specified by the control unit 20 and the information used in the execution target program are utilized to execute the execution target program. However, other configurations may be used. For example, the reliability may be specified by the control unit 20, and information that shows the specified reliability may be associated with the information used in the execution target program. Such information may be provided to another control unit such that the other control unit executes a control based on the reliability.

In other words, the execution target program is executed by the other control unit, and the reliability specified in the reliability specifying device is associated with the information used in the execution target program and provided to the other control unit. Thus, when the execution target program is executed by the other control unit, a control based on the reliability can be executed. Such a configuration may be practiced with the control unit 20 that specifies reliability serving as the control unit of the navigation device 10, and the other control unit being a brake control unit installed in the vehicle, for example.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A device for specifying a reliability of information used in driving support, comprising:
a storage medium (30) that is adapted to store one or more programs and accuracy information (30b) for specifying a reliability of information used in the one or more programs for each of a plurality of elements;
an execution target program specification unit (21a) that is adapted to specify a program from the one or more programs to be executed as an execution target program (22);
an element selection unit (21b) that is adapted to select an element that corresponds to the execution target program (22) from the plurality of elements; and
a reliability specification unit (21c) that is adapted to specify the reliability of information used in the execution target program (22) based on the accuracy information (30b) of the selected element.

2. The device for specifying a reliability of information used in driving support according to claim 1, wherein
the information used in the one or more programs includes vehicle position information and map information (30a), and
the accuracy information (30b) includes
information that specifies an accuracy of the vehicle position information (30a) that is specified depending on a relative relationship between the vehicle (C) and a feature around the vehicle (C), and
information that specifies an error and an update frequency of the map information (30a) that specifies a value related to a feature.

3. The device for specifying a reliability of information used in driving support according to claim 2, wherein
the accuracy information (30b) further includes information that specifies an invariance of a road specified by the map information (30a).

4. The device for specifying a reliability of information used in driving support according to any one of claims 1 to 3, wherein
the one or more programs are classified into a plurality of types based on an allowable error of the information used in the one or more programs, and
the element selection unit (21b) is adapted to select an element that corresponds to the execution target program type from the plurality of elements.

5. The device for specifying a reliability of information used in driving support according to any one of claims 1 to 4, wherein
the plurality of elements includes a plurality of elements having a parallel relationship, and
the element selection unit (21b) is adapted to select an element that corresponds to the execution target program (22) and is one of the plurality of elements having a parallel relationship.

6. The device for specifying a reliability of information used in driving support according to claim 5, wherein
each of the plurality of elements having a parallel relationship is associated with a subdivided plurality of sub elements, and
the element selection unit (21b) is adapted to select the sub element in accordance with a method for specifying the information used in the execution target program (22) from the sub elements that are associated with the element selected from the plurality of elements having a parallel relationship.

7. The device for specifying a reliability of information used in driving support according to any one of claims 1 to 6, wherein
the execution target program (22) is a program that determines processing content based on the specified reliability.

8. The device for specifying a reliability of information used in driving support according to claim 7, wherein
the reliability specification unit (21c) is adapted to specify the reliability for each piece of information used in the execution target program (22), and
the execution target program (22) is a program that determines processing content based on a weighted result from weighting each specified reliability in accordance with an importance of the information used in the execution target program (22).

9. The device for specifying a reliability of information used in driving support according to claim 7 or 8, wherein
the execution target program (22) increases a number of functions to be executed as the reliability increases.

10. A method for specifying a reliability of information used in driving support, comprising the steps of:
specifying a program from one or more programs to be executed as an execution target program (22);
referencing a storage medium (30) that is adapted to store the one or more programs and accuracy information for specifying a reliability of information used in the one or more programs for each of a plurality of elements, and selecting an element that corresponds to the execution target program (22) from the plurality of elements; and
specifying the reliability of information used in the execution target program (22) based on the accuracy information (30b) of the selected element.

11. The method for specifying a reliability of information used in driving support according to claim 10, wherein
the one or more programs are classified into a plurality of types based on an allowable error of the information used in the one or more programs, and
in the selecting step, an element that corresponds to the execution target program type is selected from the plurality of elements.

12. The method for specifying a reliability of information used in driving support according to any one of claims 10 to 11, wherein
the execution target program (22) is a program that determines processing content based on the specified reliability.

13. The method for specifying a reliability of information used in driving support according to claim 12, wherein
the reliability for each piece of information used in the execution target program (22) is specified in the step of specifying the reliability of information, and
the execution target program (22) is a program that determines processing content based on a weighted result from weighting each specified reliability in accordance with an importance of the information used in the execution target program (22).

14. A program comprising program code which, when run on a computer causes the computer to perform the steps of a method according to any one of claims 10 to 13.

15. A computer readable medium comprising a program according to claim 14.
